# EUROPEAN PATENT SPECIFICATION

(11) **EP 1 870 799 B1**
(45) Date of publication and mention of the grant of the patent: **30.05.2012**
(21) Application number: 05782244.7
(22) Date of filing: 07.09.2005
(51) Int. Cl.: G06F 3/041, G02F 1/1333, B32B 27/00, H01B 5/14

(54) **TOUCH PANEL AND METHOD FOR MANUFACTURING FILM MATERIAL FOR TOUCH PANEL**
BERÜHRUNGSTAFEL UND VERFAHREN ZUR HERSTELLUNG EINES FILMMATERIALS FÜR EINE BERÜHRUNGSTAFEL
ECRAN TACTILE ET PROCEDE DE FABRICATION DE MATERIAU DE FILM POUR ECRAN TACTILE

(30) Priority: 10.09.2004 JP 2004264619; 10.09.2004 JP 2004264711; 11.11.2004 JP 2004328086; 19.04.2005 JP 2005121586
(43) Date of publication of application: 26.12.2007
(73) Proprietor: Gunze Limited, Ayabe-shi, Kyoto 623-8511 (JP)
(72) Inventor: SASAKI, Kuniaki c/o Res.&Dev. Center of Gunze Ltd., Moriyama-shi, Shiga 5248501 (JP); TSUREYAMA, Kunitomo, c/o Res.& Dev. Center of Gunze Ltd., Moriyama-shi, Shiga 5248501 (JP); FURAKAWA, Shuji c/o Elect. Components Div. of Gunze Ltd,, Kameoka-shi, Kyoto 6210806 (JP); SATO, Hirotoshi c/o Res.&Dev. Center of Gunze Ltd., Moriyama-shi, Shiga 5248501 (JP); YAMADA, Tsutomu c/o Res.&Dev. Center of Gunze Ltd., Moriyama-shi, Shiga 5248501 (JP); TSUKAMOTO, Keiji, Sabae-shi, Fukui 9160019 (JP); YAMAMOTO, Masanori c/o Res.&Dev. Center of Gunze Ltd., Moriyama-shi, Shiga 5248501 (JP); SAKAMOTO, Takumi c/o Res.&Dev. Center of Gunze Ltd., Moriyama-shi, Shiga 5248501 (JP); MIZUMOTO, Hideaki c/o Res.&Dev. Center of Gunze Ltd., Moriyama-shi, Shiga 5248501 (JP)
(74) Representative: Jennings, Michael John
(86) International application number: PCT/JP2005/016418
(87) International publication number: WO 2006/028131

(56) References cited:
- EP-A- 0 926 214
- EP-A- 1 424 625
- JP-A- 8 104 710
- JP-A- 8 271 872
- JP-A- 9 305 289
- JP-A- 2000 301 648
- JP-A- 2003 114 762
- JP-A- 2003 157 149
- JP-A- 2004 130 736
- DATABASE WPI Week 199626 Thomson Scientific, London, GB; AN 1996-255121 XP002559303 & JP 08 104710 A (NIPPON STEEL CHEM CO) 23 April 1996 (1996-04-23)

## Description

### Technical Field

The present invention relates to a touch panel and a method for manufacturing film material used in a touch panel, in particular to improving technology for enhancing heat resistance and transparency of a touch panel.

### Background Art

In electronics devices including personal digital assistants (PDA), note PCs, OA devices, medical devices and car navigation systems, a touch panel is widely used which combines input means (a pointing device) with a display for the device. As representative systems of touch panels, capacitive types (also known as capacitive coupling types) are known besides resistive types, electromagnetic induction types, and optical types.

A common resistive touch panel has a structure in which pared transparent planer members, both of which have a resistance film located on one surface and oppose each other with a specific space therebetween, are provided on a display surface of, for example, an LCD (liquid crystal display), as described in Patent Reference 1. Here, the resistance film is a transparent conductive film made of ITO or the like. For a lower planer member located on the LCD side, a panel glass or a transparent film is used; for an upper planer member located on the outward side, a transparent film is used. When the touch panel is being driven, if the user applies pressure to a given location on the surface of the paired planer members using a finger or a pen, the resistance films on the members come in contact with each other and conduct electricity at the pressed position. The pressed position is detected from the resistance value between the reference position and the contact position on each resistance film. Herewith, coordinates of the contact position on the panel can be recognized, which leads to realizing an appropriate interface function.

As shown by Patent References 2 to 4, resistive touch panels have been developed today. These are called "inner-type" touch panels that inhibit outside reflections when used outdoors and have a high level of visibility. Such a resistive touch panel has a structure in which a polarizing plate is provided on one side of the body of the LCD that includes a liquid crystal layer while, on the other side, a touch panel is laid and then the polarizing plate is positioned on the touch panel, which effectively prevents outside reflections. Recent years, such inner-type touch panels are widely used.

Another example is a capacitive touch panel. As described in, for instance, Patent Reference 5, this panel includes two transparent planer members having predetermined dielectric characteristics, and each transparent planer member has a transparent conductive film (line electrode) in a stripe pattern on one surface. Then, the transparent planer members are placed opposite with each other so that the stripe transparent conductive films thereon are perpendicular to each other with an insulating layer sandwiched therebetween. On one of the transparent planer members, the side on which no transparent conductive film is positioned is an input plane, and the transparent planer members are positioned in a manner that the input plane is exposed outwardly.

In the capacitive type, when the touch panel is being driven, a measured voltage is applied alternately to each transparent conductive film at fixed intervals by a drive circuit connected from outside. In this state of things, when the user applies pressure with a finger to a given location on the surface of the members, multiple capacitors are formed, at the pressed position, by the user's finger (ground), the transparent planer member, and each transparent conductive film. A change in current in each of the capacitors is monitored, and a position with the largest change is detected as an input position. Herewith, the coordinates of the contact position on the panel are recognized, which realizes an appropriate interface function.

In such capacitive touch panels, the entire surface of each transparent planer member is thoroughly and closely attached to the insulating layer, whereby offering better visibility, as compared to the resistive type that has an air space between the paired planer members. In addition, since there is no air space therein, the capacitive type does not have a physically movable part, which yields an advantage of relatively high durability and the like.

In the case where transparent films are provided in a touch panel as the transparent planer members, they need to be light and have enough rigidity to withstand pressure from a finger when the user makes input operations and to protect the liquid crystal layer of the LCD. For this reason, the transparent films are made of, for example, polyethylene terephthalate (PET), polyethylene naphtahalate (PEN), polyethersulfone (PES), polyetherketone (PEK), polycarbonate (PC), polypropylene (PP), polyamide (PA), polyacrylate (PAC), aliphatic cyclic polyolefin, or norbornene thermoplastic transparent resin, or are formed in a layered structure made of these materials. Especially in the case of a touch panel having a polarizing plate on the surface, as in the case of the inner-type touch panel, the films require having optical isotropy, and for this reason, resin materials excelling in mechanical strength, such as cyclic polyolefin resins with optical isotropy, are widely in use.
<Patent Reference 1> Japanese Laid-Open Patent Application 2000-89914
<Patent Reference 2> Japanese Laid-Open Patent Application H10-48625
<Patent Reference 3> Japanese Laid-Open Patent Application H10-186136
<Patent Reference 4> Japanese Laid-Open Patent Application H11-333872
<Patent Reference 5> Publication of a Translation of an International Application 2003-511799

### Disclosure of the Invention

### [Problems that the Invention is to Solve]

However, conventional touch panels provided therein transparent films as the transparent planer members have the following two problems.

First, although substantially being light and having rigidity and mechanical strength, the aforementioned cyclic polyolef in materials are likely to undergo "discoloration," tinting the films with yellow or the like, in a relatively high-temperature environment where the temperature reaches 70 degree Celsius or more. If the discoloration is caused, the films lose transparency, leading to loss in panel's performance of the image display.

This problem tends to take place in the films of car-mounted navigation systems during summer, for example. Without resolving this issue, such car navigation systems are inappropriate for installation on vehicles.

In addition, each resin material mentioned above has low mechanical strength (surface hardness), as compared to glass materials. Therefore, in order to sufficiently withstand pressures exerted by a finger or a pen during input operations and resist damages and deterioration of the surface due to friction between components in practical use, a hard-coat layer needs to be formed on the surface of the material in advance by applying and hardening a light-curing or thermal-curing acrylic, cellulosic, melamine, or urethane resin material. Thus, the conventional touch panels require the hard-coat process in the manufacturing operations, leaving problems in terms of cost and operating efficiency.

Note that touch panels other than the inner-type ones also have the same problems mentioned above.

Secondly, along with miniaturization and diversification of mobile terminals, these devices are increasingly used outdoors Accordingly, there are increasing chances that touch panels mounted on the devices are used in more harsh conditions, as compared to under normal outdoor use. For example, it is sometimes the case that a touch panel is mounted on a GPS terminal installed on a motorcycle. In this case, the touch panel tends to be exposed to direct sunlight all the time under typical usage conditions, which may cause deterioration of the touch panel due to the influence of ultraviolet rays and the like in sunlight.

Especially in the case of using, for the planer members, a PES film material or ultraviolet absorbing films described in Patent Reference 4, problems arise such that the material deteriorates at an accelerated rate due to exposure to very intense and a large amount of ultraviolet irradiation, changes color to yellow, and becomes detached from other members (e.g. the hard-coat layer and conducting layer). For this reason, urgent measures are required.

The present invention has been made in view of the above problems. Its objective is to provide a resistive or capacitive touch panel that has favorable mechanical strength (surface hardness) without the need of the hard-coat process and realizes highly reliable operationality and transparency in a relatively high-temperature environment, offering excellent performance. The objective also includes providing a touch-panel film material and its manufacturing method to realize such a touch panel.

[Advantageous Effects of the Invention]

The touch panel of the present invention has improved heat resistance, as compared to the conventional case where a cyclic polyolefin resin material is used for the touch-panel film. This is realized using, on at least one of the first and second planer members, a film formed with a material made of a siloxane crosslinking acrylic silicone resin including high-bond energy Si-O bond formation in the molecular structure. Herewith, the touch panel of the present invention can be used in a relatively high-temperature environment, allowing the touch panel to be favorably applied to in-vehicle usage (car navigation system) even in summertime or in tropical areas.

In addition, the siloxane crosslinking acrylic silicone resin has Si-O bond formation, and thereby the resin itself retains enough rigidity, mechanical strength and surface hardness. Accordingly, the touch panel of the present invention does not require surface fabrication for applying an additional hard-coat process to the surface of the films unlike the conventional case in which the films are made of a cyclic polyolefin resin material. Consequently, the present invention also has an advantage of favorably enhancing manufacturing efficiency and realizing reduction in costs.

### [Summary of invention]

In an aspect, the present invention provides an Inner touch panel as according to claim 1.

In another aspect, the present invention provides a capacitive touch panel as according to claim 3.

In a further aspect, the present invention provides a capacitive touch panel as according to claim 8.

In yet another aspect, the present invention provides a method as set out in claim 10 for manufacturing siloxane crosslinking acrylic silicone resin film for use in the inner touch panel of claim 1 or the capacitive touch panel of claims 3 or 8.

Furthermore, the planer members of the present invention excel in optical isotropy, as compared to resin materials that are generally made into films by biaxial drawing. Herewith, when used as components for inner-type touch panels, these members do not impair the performance of the image display of the display.

The above-mentioned siloxane crosslinking acrylic silicone resin has excellent smoothness, whereby rendering it highly transparent. In this case, however, when the paired planer members are closely placed opposite each other, reflections of the both surfaces interfere with one another, causing a Newton ring on the surfaces. This problem can be favorably prevented by processing the "opposed surfaces" (i.e. the surfaces of the paired planer members that face each other when the planer members are placed opposite each other) to have uneven surfaces with concave and convex pits and thereby causing the surface reflections diffused.

According to the method for manufacturing set out in claim 10, forming a paste layer between the two film base materials in the wet laminate process allows the paste layer to be isolated from the air. Accordingly, the present invention is capable of, while avoiding introduction of unnecessary oxygen from a reaction system, causing an efficient crosslinking reaction of a precursor paste by the ultraviolet curing process in the resin forming step and consequently forming a thin-film siloxane crosslinking acrylic silicone resin.

Additionally, according to the method using the ultraviolet curing process, individual manufacturing steps can be continuously processed while a film material is being transported, which leads to hardening the paste layer in a short period of time. Thus, the present invention excels in operating efficiency and the like as compared to, for example, intermittent batched processing.

By including, in the molecular structure, Si-O bond formation which has higher bond energy than C-C bond, the present invention is capable of manufacturing an excellent heat-resistant film material made of a siloxane crosslinking acrylic silicone resin. Applying this film material to the planer members of a touch panel realizes an excellent in-vehicle touch panel (car navigation system) that can be used with no problem in summertime or in tropical areas.

Furthermore, the film material made of the aforementioned siloxane crosslinking acrylic silicone resin has enough rigidity and mechanical strength. This eliminates surface fabrication required as in the case of the conventional film material, where an additional hard-coat process is applied to the surface of the films. As a result, the present invention also has an advantage of favorably enhancing manufacturing efficiency and realizing reduction in costs.

By providing a UV absorbing adhesion layer between the first and second layers made of a plastic material or the like, the touch panel of Example 1 can protect components situated beneath the UV absorbing adhesion layer from ultraviolet light. In this case, even if ultraviolet light enters the touch panel when used outdoors, the plastic components do not receive direct damage or undergo deterioration. Additionally, the high hardness of the siloxane crosslinking acrylic silicone resin eliminates the need of providing a hard-coat layer, and thus is free from the hard-coat layer detachment problem. Besides, the touch panel of the present invention has a structure less likely to cause deterioration as described above, thereby remarkably preventing the resistance film and the like from getting detached. As a result, the touch panel of the present invention is capable of offering significantly high performance in outdoor settings.

### Brief Description of the Drawings

FIG. 1 is an assembly drawing of a resistive touch panel and an LCD of Embodiment 1;
FIG. 2 is a cross-sectional view of the touch panel of Embodiment 1;
FIG. 3 is a cross-sectional view showing a structure of different resistive touch panel and LCD of present invention;
FIG. 4 is a schematic diagram showing a structure of a planer Example 1 member and its periphery of a resistive touch panel of Example 1;
FIG. 5 is a schematic diagram showing a structure of a planer member and its periphery of a conventional resistive touch panel;
FIG. 6 is data showing W resistance properties of Example 1;
FIG. 7 is data showing UV resistance properties of a conventional film;
FIG. 8 is a graph showing spectral transmittance of a UV absorbing adhesion agent used for a UV absorbing adhesion layer;
FIG. 9 is a structural diagram showing a capacitive touch panel according to Embodiment 2;
FIG. 10 shows an input detection principle of a (capacitive) touch panel 1;
FIG. 11 shows data of practical examples;
FIG. 12 shows data of comparative examples;
FIG. 13 is a step diagram of a film manufacturing process of Embodiment 3;
FIG. 14 is a schematic diagram of a film manufacturing apparatus of Embodiment 3;
FIG. 15 is a schematic diagram of a film manufacturing apparatus having another structure;
FIG. 16 is a table showing adhesion between a planer member of Example 1 and another member laid thereon, as well as adhesion between a planer member of a comparative example and other members laid thereon;
FIG. 17 is a table showing results of surface hardness measurement of optical isotropic substrates; and
FIG. 18 is a table with data showing visible light transmittance of the practical examples.

### Explanation of References

- 1, 2: resistive touch panel
- 1b: capacitive touch panel
- 10A.: PET base material
- 10B: wet-lamination base material
- 10C: siloxane crosslinking acrylic silicone resin film
- 10X: paste layer
- 11, 201, 202: polarizing plate
- 11b, 21b: optical isotropic substrate
- 12: upper planer member
- 15: lower planer member
- 15G: glass substrate
- 100, 150: film manufacturing apparatus
- 101: film base material
- 102: tray
- 103: backup roller
- 104: roll knife
- 105A, 105B, 112: roller
- 106: film base material (wet-lamination material)
- 107: UV irradiation apparatus
- 107A: UV shielding case
- 107B: UV lamp
- 108A, 108B: detachment roller
- 109-111: take-up roller
- 120A: precursor paste
- 120: 1^{st} layer
- 121: UV absorbing adhesion layer
- 122: 2^{nd} layer

### Best Mode for Carrying out the Invention

### EMBODIMENT 1

### 1.1 Structure of Resistive Touch Panel

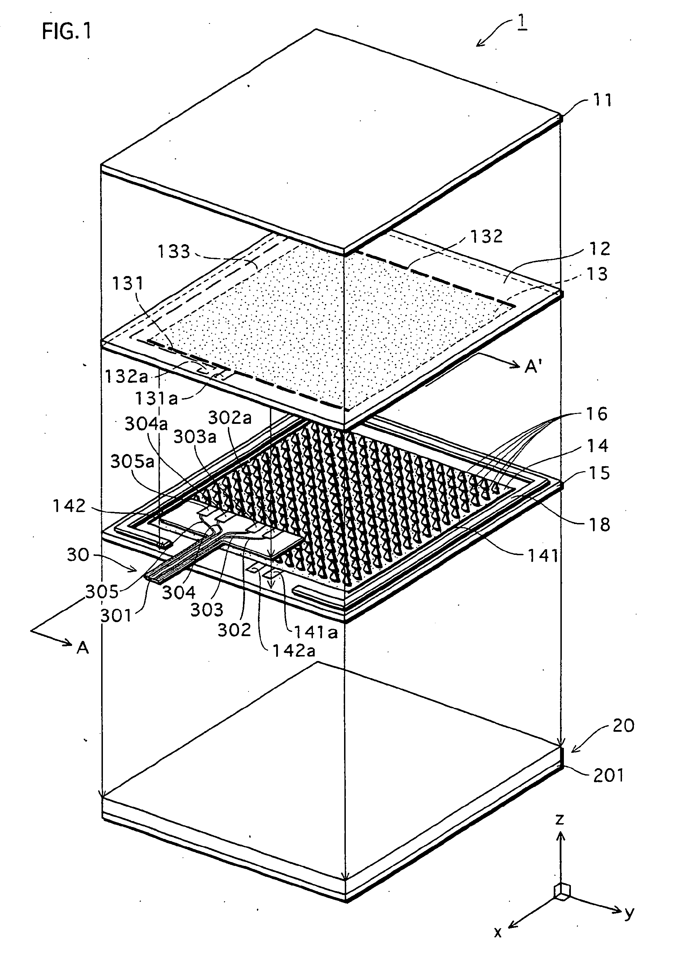

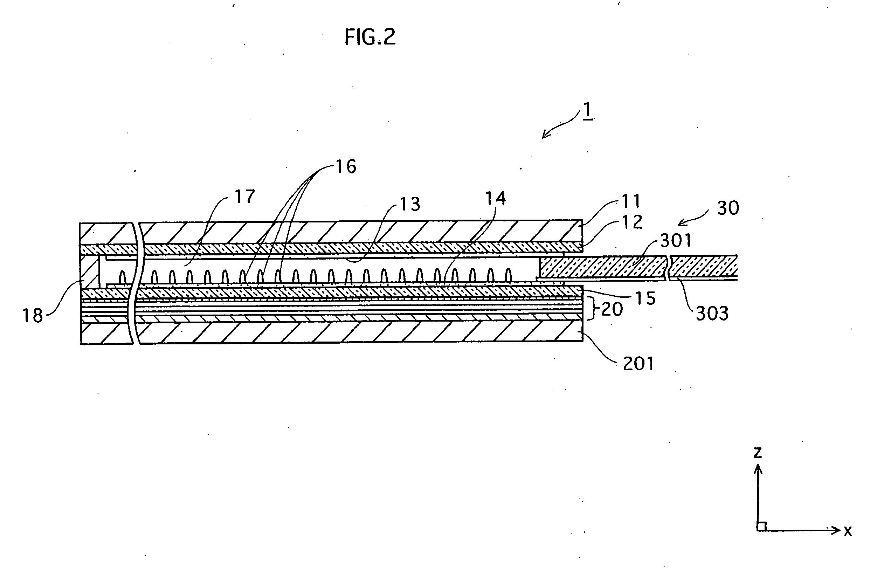

FIG. 1 is an assembly drawing showing a structure of an inner-type resistive touch panel 1 (hereinafter, referred to as the "touch panel 1") according to Embodiment 1 of the present invention, with an example of the structural assembly of the touch panel 1 and an LCD. FIG. 2 is a cross-sectional view of the touch panel along the A-A' line.

As shown in FIG. 1, the touch panel 1 is formed by arranging the following members into a layered structure in the order starting, from the top, with: a polarizing plate 11; an upper planer member 12; a resistance film 13; an interconnection substrate 30; spacers 16; a resistance film 14; and a lower planer member 15. Beneath the lower planer member 15, an LCD body 20 and a polarizing plate 201, which are components of an LCD panel, are stacked in the stated order to thereby collectively form a built-in LCD touch panel.

The touch panel 1 uses an input detection method known as "4-wire method," with a structure called the "F-F inner type" where film materials are used in both planer members 12 and 15. The touch panel 1 here has been designed to be applied to in-vehicle car navigation systems.

Each of the polarizing plates 11 and 201 is made of, for example, a dye linear polarizing plate with a thickness of 0.2 mm. Of them, the polarizing plate 11 is laid on top of the surface of the upper planer member 12 so as to be exposed outwardly, which is a characteristic feature of inner-type touch panels. Herewith, the amount of reflected light caused by visible light entering inside the touch panel can be reduced to half or less as; compared to the case where no polarizing plate is provided.

The reference number 20 indicates the LCD body that is directly laid on the lower planer member 15. This is a publicly known TFT LCD substrate, and forms a unit in which a transparent conductive layer, a color filter, a liquid crystal molecule layer, a TFT substrate, and another transparent conductive layer are stacked one atop the other (not shown). Note that the LCD body 20 can be other than the TFT type, and does not have to take the above-mentioned layered structure. The polarizing plate 201 is positioned beneath the LCD body 20.

The resistance films 13 and 14 are positioned on the opposed surfaces of the upper planer member 12 and the lower planer member 15, respectively, and formed by resistance films (transparent conductive films) having a known resistance (surface resistance) and made of ITO (Indium Tin Oxide), antimony-added tin oxide, fluorine-added tin oxide, aluminum-added zinc oxide, potassium-added zinc oxide, silicon-added zinc oxide, zinc oxide-tin oxide, indium oxide-tin oxide, or various other metal materials. By CVD, vacuum deposition, sputtering, or ion beam with the use of these materials, the resistance films 13 and 14 having a predetermined area are formed uniformly on the surface of the planer members 12 and 15. Then, a rib spacer 18 having a height of about 0.05 mm and formed by one of an adhesive member, an adhesive sheet, and a double-sided adhesive tape which has adhesive layers on the both sides of a plastic film is provided between the resistance films 13 and 14, as shown in FIG. 2, whereby the resistance films 13 and 14 normally oppose each other with a specific space therebetween.

One example of the formation patterns of the resistance films 13 and 14 is shown in FIG. 1, in which the resistance films 13 and 14 are formed to have a rectangular shape on the opposed surface of the respective planer members 12 and 15. Subsequently, drawing electrodes 131/132 and 141/142 are provided along paired sides parallel to the y-axis or x-axis of the resistance films 13 and 14, forming xy orthogonal coordinates as a whole. The drawing electrodes 131, 132, 141 and 142 have terminal electrodes 131a, 132a, 141a and 142a, respectively. Note that the reference number 133 is a drawing circuit for connecting the terminal electrode 132a and the drawing electrode 132.

On the other hand, between the resistance films 13 and 14, the interconnection substrate 30 is inserted in a predetermined position. The interconnection substrate 30 is composed of a flexible substrate 301 made of a resin material, such as PET or polymide, and wirings 302-305 formed on the surface of the substrate 301. The wirings 302-305 are made of a material having good electrical conductivity, such as Au, Ag, or Cu, and have terminal electrodes 302a-305a formed thereon.

As to the input detection principle (4-wire method) of the touch panel 1 with the electric wiring installed in the above described manner, first, a direct voltage of about 5 V is applied between the drawing electrodes 131 and 132 positioned along the y-axis when the touch panel 1 is driven, and then data on the y-coordinate position is obtained using the drawing electrodes 141 and 142 on the x-axis as voltage detecting electrodes when the user makes an input.

Subsequently, a voltage is applied between the drawing electrodes 141 and 142 on the X-axis, and then data on the x-coordinate position is obtained using the drawing electrodes 131 and 132 on the y-axis as the voltage detecting electrodes. Herewith, the coordinate information of both x and y can be acquired. By repeating these detection steps alternately, the touch panel 1 sequentially obtains input information from the user to thereby exercise a function as a GUI (Graphical User Interface).

The upper and lower planer members 12 and 15 are each formed from a resin film, 0.2 mm in thickness. At least the opposed surfaces are processed to have uneven surfaces with microscopic concave and convex pits. Such uneven surfaces can be formed during the fabrication of the films by, for example, pressing a supporting cast having a desired surface hardness against the opposed surfaces using thermocompression. Herewith, the problem of a Newton ring arising when the planer members 12 and 15 are closely placed opposite each other can be effectively prevented, whereby enhancing the visibility.

Furthermore, on the surface of the lower planer member 15 that opposes the upper planer member 12, projecting hemispheroidal spacers 16 are arranged in a matrix in the x- and y-axis directions at regular intervals to thereby prevent the resistance films 13 and 14 from having unnecessary contact with each other. The projecting spacers 16 can be made of a light-curing acrylic resin, and is designed to be, for example, 0.01 mm in height and 0.01 mm to 0.05 mm inclusive in diameter in accordance with the distance between the opposed surfaces of the upper and lower planer members 12 and 15. Note that the figure shows the projection spacers 16 larger than their actual size for illustrative purposes. Each projecting spacer 16 can have a shape other than a hemispheroid, such as a cone or a cylindroid. The same applies to Embodiment 2 to be described later in this document.

Here, the touch panel 1 of Embodiment 1 is characterized by the material forming the upper and lower planer members 12 and 15. That is, each of the planer members 12 and 15 is formed by an about 0.2 mm-thick film member made of a siloxane crosslinking acrylic silicone resin, whereby offering better heat resistance and transparency than conventional touch panels

The following gives a detailed account of this feature.

### 1-2. Upper and Lower Planer Members and Advantageous Effects Thereof

Using, as a film material forming the planer members 12 and 15, a siloxane crosslinking acrylic silicone resin having a cross-linked structure with a great number of Si-O-Si bonds (siloxane bonds), the present invention has excellent material characteristics (e.g. mechanical strength including impact resistance, heat stability, chemical stability, and transparency with total light transmittance of 90% or more), and enables the touch panel to have a wide range of actual operating temperature, -40 °C to 100 °C.

PES, cyclic polyolefin resins or the like is normally used as a film material for the upper and lower planer members of conventional F-F inner-type touch panels; however, these film materials are generally difficult to maintain ideal heat resistance in a hot environment over a long period of time (for example, in-vehicle car navigation systems during summer). Therefore, if they are used in a high-temperature environment, the films are combined with oxygen in the air, causing discoloration (e.g. change into yellow) of the films. This leads to problems such as a loss in image display performance. For this reason, the range of actual operating temperature of the conventional inner-type touch panels is -40 °C to 60 °C. On the other hand, the touch panel 1 of the present embodiment uses a siloxane crosslinking acrylic silicone resin for the planer members 12 and 15, which thereby offers favorable optical isotropy without causing discoloration and having an ideal structure for the use in a hot environment (especially, application in car navigation systems as above mentioned, and use in high-temperature manufacturing plants).

Specifically speaking, the siloxane crosslinking acrylic silicone resin has a molecular structure shown in Constitutional Formula 1 below, for example. Here, the siloxane crosslinking is formed by ultraviolet light inducing crosslinking between acrylic resin molecules and silicon atoms.

Note that the actual molecular structure slightly differs from the ideal structure of Constitutional Formula 1 because only acrylic molecules, or only silicon atoms, may bond with each other successionally depending on the ratio between acrylic molecules and silicon atoms. In addition, R in the formula could be a hydrogen atom. 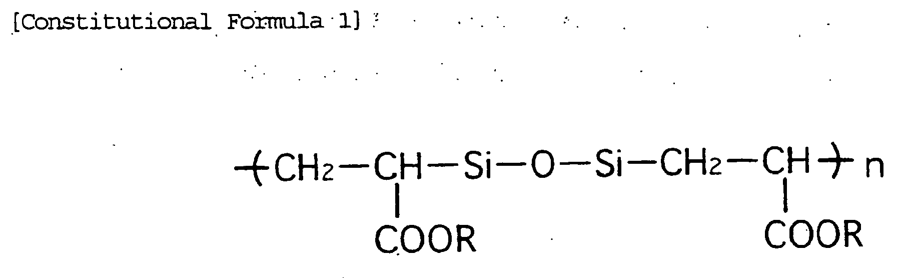 The siloxane crosslinking acrylic silicone resin has higher heat resistance and stability as compared to a cyclic polyolefin resin used as a conventional film material.

While C-C bond energy in the main molecular structure of such acrylic polyolefin resin is 347 kJ/mol, Si-O bond energy in the siloxane crosslinking acrylic silicone resin is about 370 kJ/mol, which shows that the siloxane crosslinking acrylic silicone resin excels the conventional resin in strength. Having the Si-O bond formation, the siloxane crosslinking acrylic silicone resin itself has sufficient rigidity and mechanical strength. For this reason, unlike the case where the conventional cyclic polyolefin resin material is used, the present invention needs no additional surface processing where a hard-coat layer is formed on the film surface. Consequently, the present invention also has an advantage of favorably enhancing manufacturing efficiency and realizing reduction in costs.

Such a siloxane crosslinking acrylic silicone resin can be created by, for example, using acrylate-containing alkoxysilane. In this case, the resin is synthesized by sequential polymerization reaction of acrylate groups, and hydrolysis and condensation reaction of alkoxysilyl groups. Yet such a resin could be synthesized by a different method.

Note that the "siloxane crosslinking acrylic silicone resin" is a material actually disclosed in Japanese Laid-Open Patent H08-104710, for example. However, this material is commonly used as a hard-coat coating agent as discussed in the patent application publication, and the present invention has become the first to use the material as film members (planer members).

In Embodiment 1, the film material is used for both upper and lower planer members of the F-F inner-type touch panel; however, one of the planer members can be made of the conventional film material. Nonetheless, in order to fully achieve heat resistance of the present invention, it is preferable to use siloxane crosslinking acrylic silicone resin for the film material of the planer members.

### 1-3. Structure of Different Touch Panel

The structure of the touch panel is not limited to one described above. For example, of the upper and lower planer members 12 and 15, the upper planer member 12 may be formed by a siloxane crosslinking acrylic silicone resin film while the lower planer member 15 being made of glass.

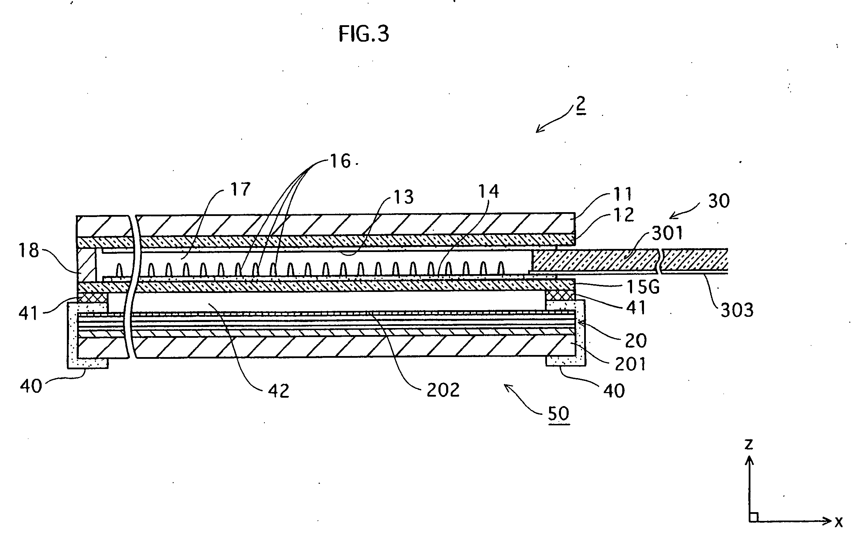

FIG. 3 is a cross-sectional view showing a structure of a different touch panel from one of Embodiment 1. A touch panel 2 is an F-G type in which the lower planer member is a glass substrate 15G and is characterized in that a unit 50 including the LCD body 20 is located below the glass substrate 15G, without being in contact with the surface of the glass substrate 15G.

The glass substrate used for 15G normally has a thickness in the range of 0.5 mm and 2.0 mm inclusive.

The periphery of the LCD body 20, in which the polarizing plate 201 is positioned at the bottom, is surrounded by metal frames 40. Additionally, the glass substrate 15G and a polarizing plate 202 are joined by bonding layers 41 having some thickness and positioned on the metal frames 40, and thereby an air space 42 having a specific width is reserved between the glass substrate 15G and polarizing plate 202.

The glass substrate 15G is provided to protect the LCD body 20 from pressures applied during input operations.

When applied to the F-G type touch panel 2, the present invention also produces the same effects as when applied to the F-F type touch panel 1. In addition, since using the glass substrate 15G, the F-G type touch panel 2 is expected to have further better rigidity and heat resistance.

### EXAMPLE 1

### 2-1. Structure of Resistive Touch Panel

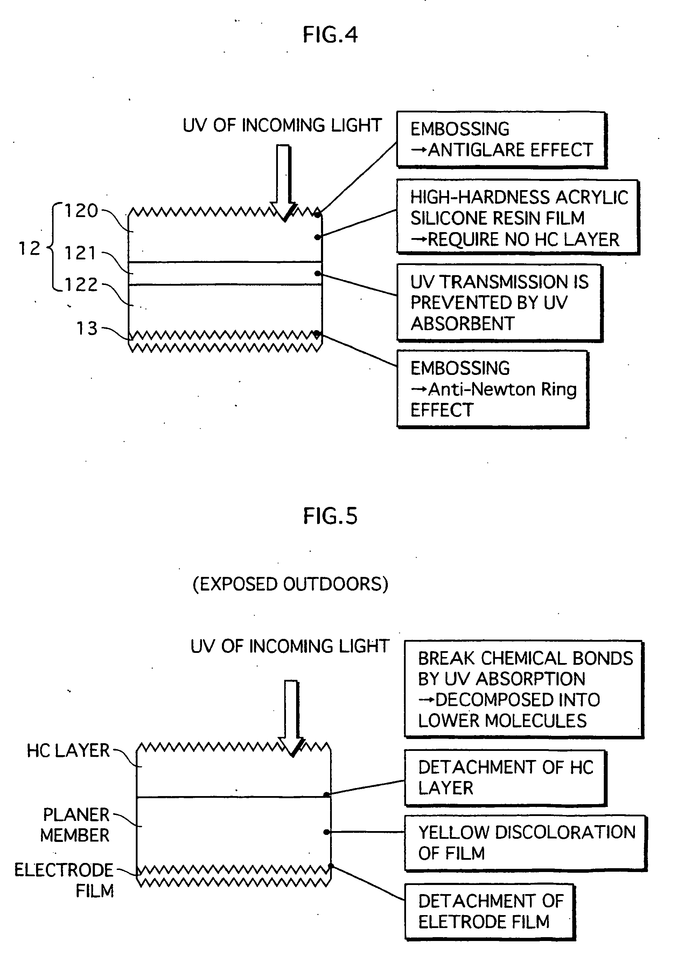

FIG. 4 is a schematic cross-sectiooal view showing a peripheral structure of the upper planer member 12 of the resistive touch panel 1 according to Example 1.

Example 1 is characterized by the structure of the upper and lower planer members 12 and 15. That is, as shown in FIG. 4, the upper planer member 12 is structured as a layered body in the order starting, from the top in the figure, with a 1^{st} layer 120 (a siloxane crosslinking acrylic silicone resin film), a UV absorbing adhesion layer 121, and a 2^{nd} layer 122 (a siloxane crosslinking acrylic silicone resin film).

Each 1^{st} and 2^{nd} layers 120 and 122 is formed by an about 0.2 mm-thick film member made of a siloxane crosslinking acrylic silicone resin, whereby offering excellent heat resistance and transparency as compared to other resin film materials such as PET and PES. On each surface of the 1^{st} and 2^{nd} layers 120 and 122, microscopic concave and convex pits are formed to obtain an antiglare effect. The formation of the microscopic pits scatters incoming light and effectively prevents the problem of a Newton ring arising when the planer members 12 and 15 are closely placed opposite each other, to thereby enhance the visibility.

The UV absorbing adhesion layer 121 is positioned between the two layers 120 and 122, and includes therein a UV absorbent. Example 1 is characterized by employing a structure in which the UV absorbing adhesion layer 121 is provided as a discrete layer inserted between the two layers 120 and 122, instead of a UV absorbent is dispersed in a plastic material forming the planer members as in the conventional case shown in Patent Reference 4.

A serious problem would not occur if the intensity of ultraviolet light hitting the touch panel is relatively low; however, in the case where the touch panel is used as input means for a motorcycle's GPS or a PDA used largely outdoors, high intensity ultraviolet light enters the touch panel over a long period of time in accordance with the duration of use.

FIG. 5 is a schematic cross-sectional view showing a peripheral structure of a planer member used in a conventional touch panel. As shown in the figure, intense ultraviolet light transmits through the antiglare hard-coat layer (AGHC) and enters inside. Here, some plastic materials (PES or PET films) in which a UV absorbent is dispersed have less chemical and physical strength than a normal plastic material having therein no UV absorbent dispersed.

Therefore, when a normal plastic material having no UV absorbent therein and a plastic material having such UV absorbent are exposed to intense ultraviolet light over a long period of time, they undergo discoloration to yellow and become degraded. Or ultraviolet light breaks chemical bonds in the molecules, which leads to destruction of the plastic materials. Even if such plastic materials do not get degraded or destroyed, ultraviolet light can alter the property of the plastic materials, whereby causing detachment of other layers stacked on the planer members (e.g. hard-coat layer and resistance film).

On the other hand, in Example 1, the UV absorbing adhesion layer 121 is provided discretely from the plastic materials (corresponding to the 1^{st} and 2^{nd} layers 120 and 122). Accordingly, even if ultraviolet light enters the touch panel when used outdoors, the degradation and destruction of the plastic materials situated beneath the UV absorbing adhesion layer can be prevented, remarkably reducing occurrence of the detachment of the resistance film and the like. As a result, the touch panel of Example 1 is able to offer very high performance in outdoor use, and largely exert the advantageous effects in a touch panel in which the surface of the upper planer member 12 is exposed due to no polarizing plate 11 being provided thereon.

Additionally, in Example 1, the 1^{st} and 2^{nd} layers 120 and 122 are made of a siloxane crosslinking acrylic silicone resin. This resin excels in mechanical strength and heat resistance as compared to other materials, such as PET and PES, enabling the touch panel to be favorably used with no hard-coat layer.

Although no diagrammatic representation is provided, the planer member 15 has the same structure as the planer member 12. The present invention requires that at least the upper planer member 12 positioned near the outside is composed of the 1^{st} layer 120, 2^{nd} layer 122, and UV absorbing adhesion layer 121, and the 1^{st} layer 120 situated closest to the outside is made of the siloxane crosslinking acrylic silicone resin; however, the lower planer member 15 does not have to have the same structure. For example, the following combination can be employed.

a) upper planer member 12: 1^{st} layer (siloxane crosslinking acrylic silicone resin); UV absorbing adhesion layer; 2^{nd} layer (any one of siloxane crosslinking acrylic silicone resin, PET, PES and the like)
b) lower planer member 15: mono-layer film made of PET, PES or the like

Here, the "PET, PES or the like" means siloxane crosslinking acrylic silicone resins, glass materials, and other inorganic materials, in addition to various resin films conventionally used as planer members. In addition, the "films" are not limited to flexible materials only, and can be materials having a specific hardness.

Nonetheless, in order to cause a touch panel to produce the best performance of the present invention, it is desirable that the lower planer member 15 has the same structure as the upper planer member 12 of Example 1 and both the 1^{st} and 2^{nd} layers are made of the siloxane crosslinking acrylic silicone resin.

### 2-2. Ultraviolet Light Resistance

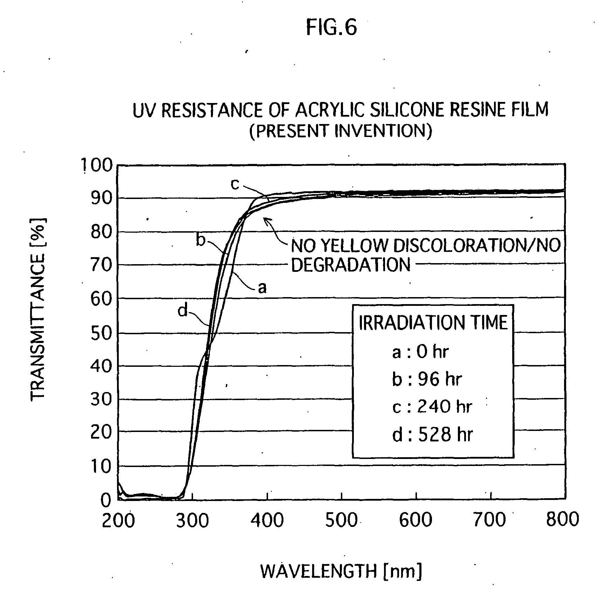

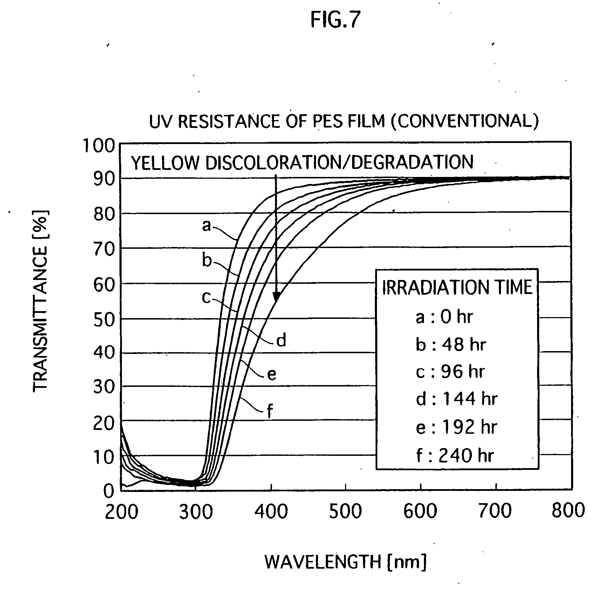

FIGs. 6 and 7 show ultraviolet light resistance of the 1^{st} and 2^{nd} layers (siloxane crosslinking acrylic silicone resin films) of the planer member of Example 1 and a conventional planer member (PES film) used as a comparative example, respectively, in relation to film transmittance and wavelength.

FIG. 7 shows that the conventional PES film undergoes deterioration associated with yellow discoloration over time especially at the transmittance corresponding to a ultraviolet wavelength of around 400 nm, and that the transmittance decreases to nearly half the level immediately before the start of the test when the time period of ultraviolet light irradiation exceeds 240 hours.

On the other hand, it can be understood that the problem of deterioration with yellow discoloration as seen in FIG. 7. has been dramatically improved in the siloxane crosslinking acrylic silicone resin film of FIG. 6, and that good transmittance is maintained even after 528 hours of ultraviolet light irradiation.

### 2-3. Resistance to Detachment and Others

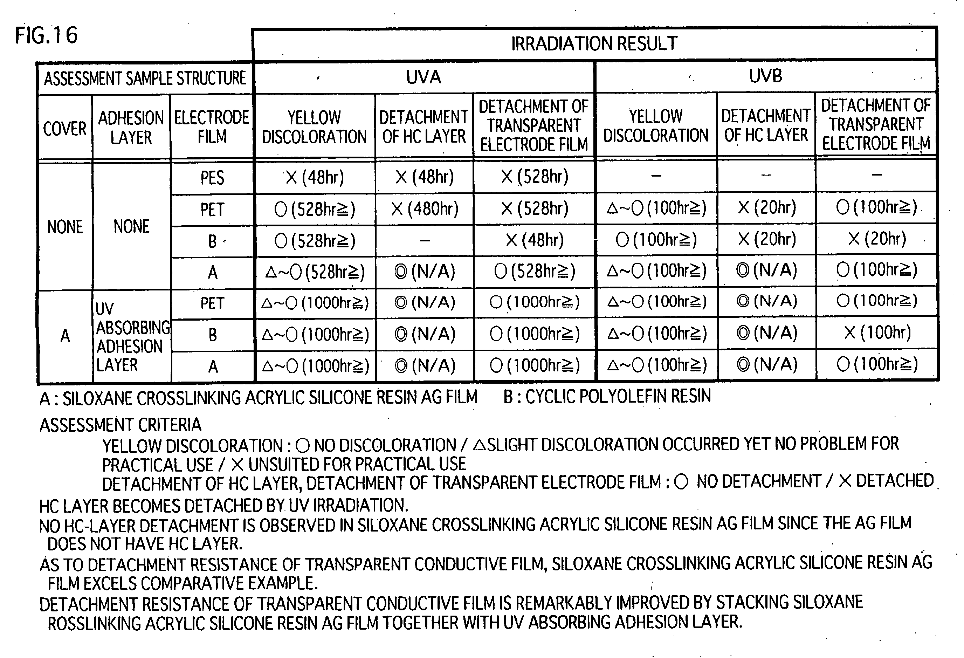

FIG. 16 is a table showing adhesion between the planer member of Example 1 and another member (transparent conductive film) laid thereon, as well as adhesion between the planer member of the comparative example and other members (hard-coat layer and transparent conductive film) laid thereon. In the table, "HC" means the hard-coat layer; "assessment sample structure", the upper planer member; "siloxane crosslinking acrylic silicone resin AG film", the planer member of Example 1 formed by an antiglare siloxane crosslinking acrylic silicone resin film, and a segment above "siloxane crosslinking acrylic silicone resin AG film", the planer member of the comparative example.

### <Terms in FIG. 16 and Experimental conditions>

UVA: showing results of a light-deterioration accelerating test (UV carbon arc)
UVB: showing results of a light-deterioration accelerating test (UV fluorescent lamp)

(Since having a shorter irradiation wavelength than UVA, UVB has higher energy than UVA, and therefore the test with UVB is stricter.)
- Conditions for UVA light-deterioration accelerating test: (UV carbon arc light source, Fade Meter U48 produced by Suga Test Instruments Co., Ltd.),assessed by a testing machine compliant with JISB7751; black panel temperature 63 °C; supply voltage 135 V; and supply current 16 A.
- Conditions for UVB light-deterioration accelerating test: (UV fluorescent lamp source, Dewpanel Light Control Weather Meter DPWL-5R produced by Suga Test Instruments Co.,Ltd.), assessed by a testing machine compliant with ASTMG53; chamber temperature 60 °C; and irradiation intensity 20 W/m².

- UVA light: ultraviolet light ranging from 315 nm to 380 nm inclusive.
- UVB light: ultraviolet light ranging from 280 nm to 315 nm inclusive.

As shown in FIG. 16, with the comparative examples, detachment of the hard-coat layer or the transparent conductive film due to UVA/UVB irradiation is observed no matter which one of PES, PET, and the cyclic polyolefin resin is used. In addition, with PES, yellow discoloration occurs at a comparatively early stage of the irradiation duration.

Example On the other hand, Example 1 using the UV absorbing adhesion layer has resolved the problem of detachment of the hard-coat layer by forming the 1^{st} layer with the siloxane crosslinking acrylic silicon resin AG film requiring no hard-coat layer. As to yellow discoloration, although the siloxane crosslinking acrylic silicone resin AG film itself slightly undergoes discoloration to yellow, there is no problem for practical use. Additionally, as to detachment resistance of the transparent conductive film, Example 1 excels the oomparative examples in both UVA and UVB tests. Furthermore, stacking the siloxane crosslinking acrylic silicone resin AG film together with the W absorbing adhesion layer dramatically enhances the detachment resistance of the transparent conductive film

Thus, it can be seen that Example 1 is capable of realizing a touch panel offering favorable performance even in environments with intense ultraviolet light emanating over comparatively long period of time.

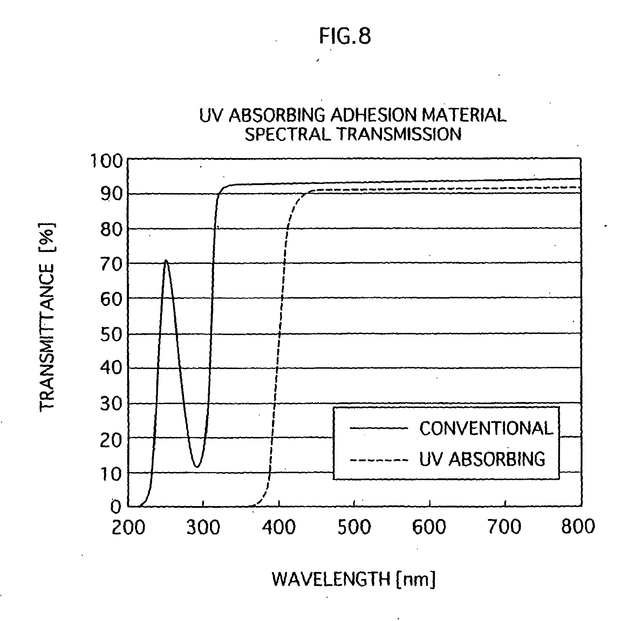

FIG. 8 shows spectral transmittance of a UV absorbing adhesion agent used for the UV absorbing adhesion layer. As shown in the figure, it is understood that the UV absorbing adhesion agent of Example 1 blocks ultraviolet light having a wavelength of 380 nm or shorter while the conventional adhesion agent (which includes no UV absorbing agent) transmits ultraviolet light having such a wavelength

### EMBODIMENT 2

### 3-1. Structure of Capacitive Touch Panel

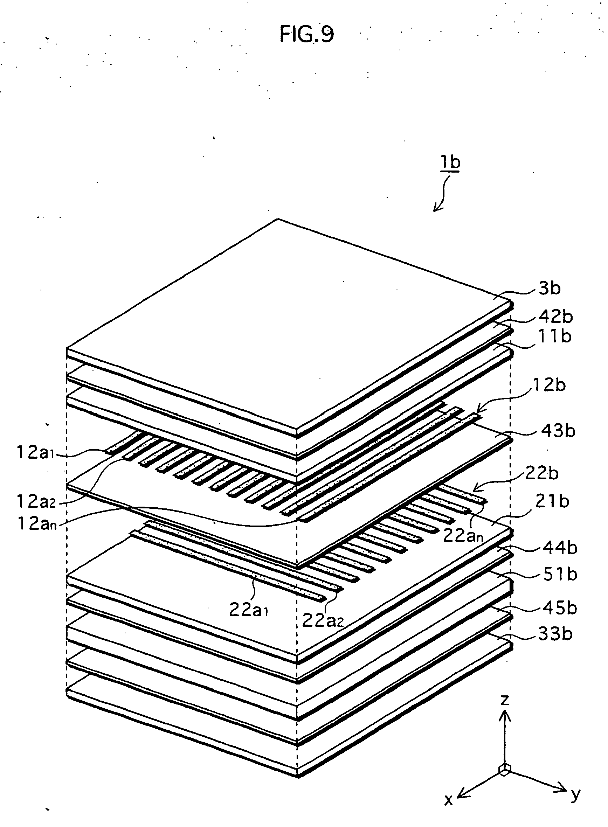

FIG. 9 is an assembly drawing showing a structure of a capacitive touch panel 1b (hereinafter, referred to as the "touch panel 1b") 2 according to Embodiment 2 of the present invention.

As shown in FIG. 9, the touch panel 1b is formed by arranging the following members into a layered structure in the order starting, from the top, with: a polarizing plate 3b; an adhesion layer 42b; an optical isotropic substrate (a 1^{st} transparent planer member) 11b; a transparent conductive film 12b; an adhesion layer 43b; a transparent conductive film 22b; an optical isotropic substrate (a 2^{nd} transparent planer member) 21b; an adhesion layer 44b; a support 51b; an adhesion layer 45b; and a λ/4 phase difference plate 33b.

Note that, when the touch panel 1b is used, an LCD body (a unit in which a transparent conductive layer, a color filter, a liquid crystal molecule layer, a TFT substrate, and another transparent conductive layer are stacked one atop the other) that is a component of an LCD device is laid beneath the λ/4 phase difference plate 33b to thereby collectively form a built-in LCD touch panel. The touch panel device here has been designed to be applied to in-vehicle car navigation systems.

The polarizing plate 3b is made of, for example, a dye linear polarizing plate with a thickness of 0.2 mm. The polarizing plate 3b is laid on top of the optical isotropic substrate, and their entire contacting surfaces are bonded to each other by the adhesion layer 42b in a manner that the polarizing plate 3b is exposed outwardly. Used together with the λ/4 phase difference plate 33b, the polarizing plate 3b reduces the amount of reflected light caused by visible light entering inside the touch panel to half or less when compared to the case where no polarizing plate is provided. In addition, the polarizing plate 3b makes the setting structure (sensing pattern) of the transparent conductive films 12b and 22b less visible from outside, whereby enhancing the visibility of the touch panel.

The adhesion layers 42b, 43b, 44b and 45b are here made of a transparent insulating material or a transparent adhesive agent, and each is provided to form an insulating layer that bonds layers positioned above and below the adhesion layer at their entire contacting surfaces. For such an insulating layer, a film or the like can be used as a base material, besides the adhesion layers 42b, 43b, 44b and 45b.

Materials made of the optical isotropic substrates 11b and 21b are the main feature of the present invention. These optical isotropic substrates 11b and 21b are transparent planer members having characteristics to be hereinafter described. First, the transparent conductive films 12b and 22b are positioned on the surface of the optical isotropic substrates 11b and 21b, respectively. Then, the optical isotropic substrate 11b with the transparent conductive film 12b and the optical isotropic substrate 21b with the transparent conductive film 22b are stacked one atop the other with the adhesion layer 43b inserted therebetween.

The transparent conductive film 12b/22b is composed of multiple strip electrodes (line electrodes 12ₐₗ-12ₐₙ/22ₐₗ-22ₐₙ) which are arranged close to one another in stripes on the opposed surface of the optical isotropic substrate 11b/21b, as shown in FIG. 9. These line electrodes 12ₐₗ-12ₐₙ and 22ₐₗ-22ₐₙ, which form a sensor trace of the touch panel 1b, extend in the x- and y-directions, respectively, and are positioned at right angles to each other to form a matrix with the adhesion layer 43b inserted therebetween.

The transparent conductive films 12b and 22b can be made of a transparent conductive material having a known resistance (surface resistance)-for example, ITO (Indium Tin Oxide), antimony-added lead oxide, fluorine-added tin oxide, aluminum-added zinc oxide, potassium-added zinc oxide, silicon-added zinc oxide, zinc oxide-tin oxide, indium oxide-tin oxide, or various other metal materials. Here, only one of these materials may be chosen and used, or two or more materials may be stacked to form a layered film. The line electrodes 12ₐₗ-12ₐₙ and 22ₐₗ-22ₐₙ of the sensor trace are formed on the surface of the optical isotropic substrates 11b and 21b by CVD, vacuum deposition, sputtering, or ion beam with the use of these materials, or by forming a film by coating or printing with masking if necessary.

As to a specific method of forming the transparent conductive film, first, a transparent conductive material is uniformly coated on one surface of the optical isotropic substrate 12b/22b, and then a mask in a desired pattern is applied to the coated surface. After a reasonable period of time elapses, etching is performed using an acid solution to remove only unnecessary part of the film. Then, the mask is removed by the use of an alkaline fluid or another stripping agent. Instead of this wet etching method, photo-etching may be employed in which a photosensitive material is mixed with the transparent conductive material.

The transparent conductive film can be processed by another patterning method, laser patterning. In this case, it is a matter of course that the laser output must be adjusted so as not to damage the optical isotropic substrate.

In addition, when the transparent conductive film 12b/22b is formed uniformly on the surface of the optical isotropic substrate 11b/21b, a mask is applied in advance and then a patterned film can be formed using any one of CVD, vacuum deposition, sputtering, ion beam, coating, and printing.

Furthermore, the pattern does not have to be strip-shaped, and can have a irregular shape or a linear shape.

To each of the line electrodes 12ₐₗ-12ₐₙ and 22ₐₗ-22ₐₙ, a drawing circuit (not shown) for feeding external power to the line electrode is connected. This drawing circuit can also be formed by using the transparent conductive material and applying a predetermined pattern to the surface of the optical isotropic substrate 11b/21b. By applying a measured voltage to each of the line electrodes 12ₐₗ-12ₐₙ and 22ₐₗ-22ₐₙ via this drawing circuit, a publicly known special controller for detecting change in voltage caused when the user makes input operations is connected.

For the transparent conductive films 12b and 22b of the touch panel, an undercoat layer can be provided to enhance the transparency. The undercoat layer is composed of two layers having different light refraction indexes. Of the two layers, one with a lower light refraction index should be positioned so as to be closer to the transparent conductive film 12b/22b than one with a higher light refraction index.

FIG. 9 shows a structural example in which the transparent conductive film 12b/22b is provided on only one surface of the optical isotropic substrate 11b/21b. The present invention is, however, not limited to the structure, and the transparent conductive film 12b/22b can be provided on both surfaces of the optical isotropic substrate, for example. In this case, however, care must be taken in handling these components during the film forming and patterning.

The support 51b is for giving rigidity to the touch panel 1b, and can be formed with a glass plate having a thickness in the range of 0.2 mm and 0.5 mm inclusive, or with a resin material having equivalent hardness to the glass plate. When the entire surface of the support 51b is bonded by the adhesion layers 44b and 45b, the support 51b has favorable rigidity. Note that, in the case where the rigidity of the touch panel 1 is not very important, the support 51b does not have to be included in the structure.

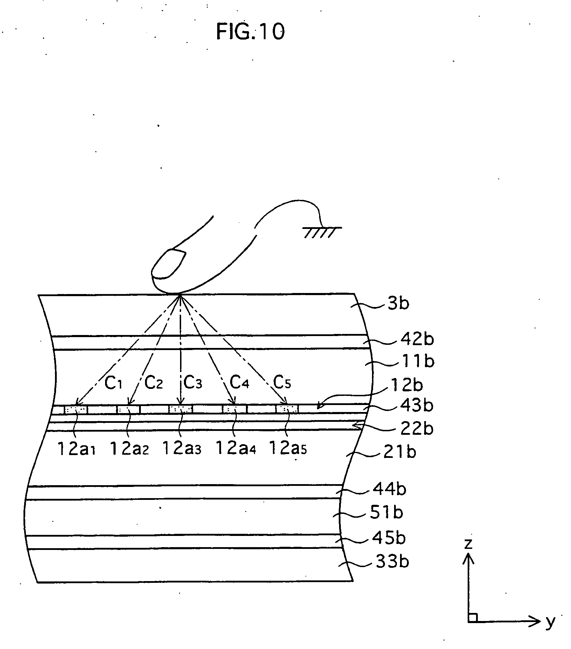

The following explains an input detection principle of the (capacitive) touch panel 1 having the above structure. FIG. 10 is a schematic diagram showing the input detection principle.

When the touch panel 1 is being driven, the special controller applies, via the drawing circuit, a measured voltage alternately to the group of the line electrodes 12ₐₗ-12ₐₙ extending in the x-direction and the group of the line electrodes 22ₐₗ-22ₐₙ extending in the y-direction at fixed intervals of time.

In this state of things, when the user touches the polarizing plate 3, multiple capacitors are formed between the user's finger and the line electrodes 12ₐₗ-12ₐₙ, through the optical isotropic substrate 11 (here, the polarizing plate 3 and adhesion layer 42 are included), as shown in FIG. 10. The number of capacitors corresponds to the number of the line electrodes 12ₐₗ-12ₐₙ. FIG. 10 schematically illustrates the capacitors C1-C5 formed in correspondence with the line electrodes 12ₐₗ-12ₐ₅ to simplify the explanation. The figure shows the capacitors C1-C5 formed when a measured voltage is applied between the line electrodes 12ₐₗ-12ₐₙ extending in the x-direction; however, multiple capacitors also form based on the same principle when a measured voltage is applied to the line electrodes 22ₐₗ-22ₐₙ extending in the y-direction.

Capacities of the capacitors vary depending on a distance between the finger and each line electrode, and the maximum amplitude of the measure voltage is found at a point with such a distance being the shortest. Accordingly, in the case of FIG. 10-i.e. in the case a measured voltage is applied to the line electrodes 12ₐₗ-12ₐₙ, the special controller determines a y-coordinate of the touched position by identifying a point where the largest change in the measured voltage is seen.

Subsequently, a measured voltage is applied to the line electrodes 22ₐₗ-22ₐₙ extending in the y-direction in the same manner, and an x-coordinate of the touched position is determined by identifying a line that detected the largest measured voltage.

The input point is detected through this process. By repeating these detection steps alternately, the touch panel 1b sequentially obtains user's input information to thereby realize a function as a GUI (Graphical User Interface).

Here, the touch panel 1b of Embodiment 2 is characterized by the material forming the optical isotropic substrates 11b and 21b. Each optical isotropic substrate 11b/21b is formed with a transparent planer member that is made of a siloxane crosslinking acrylic silicone resin and has a thickness in the range of 0.1 mm and 0.4 mm, preferably about 0.2 mm. Herewith, the touch panel 1b is capable of offering better heat resistance and transparency than conventional touch panels.

The following gives a detailed account of this feature.

### 3-2. Advantageous Effects of Optical Isotropic Substrate of Present Invention

In the capacitive touch panel 1b of Embodiment 2, a siloxane crosslinking acrylic silicone resin having a great number of Si-O-Si bonds (siloxane bonds) is used for the transparent planer members structuring the optical isotropic substrates 11b and 21b. Herewith, the touch panel 1b has excellent material characteristics (e.g. mechanical strength including impact resistance, heat stability, chemical stability, and transparency) in the same manner as the resistive touch panel 1 of Embodiment 1. This allows the touch panel. 1b to have a wide range of actual operating temperature, -40 °C to 100 °C.

In Embodiment 2, the siloxane crosslinking acrylic silicone resin material is used for both optical isotropic substrates 11b and 21b of the structural example of the touch panel; however, one of the planer members can be made of a conventional resin material. Nonetheless, in order to fully achieve excellent performance of the present invention in heat resistance, visibility and transparency, it is preferable to use the siloxane crosslinking acrylic silicone resin for both optical isotropic substrates 11b and 21b.

### 3-3. Practical Example and Comparative Experiment (Common Experiment)

The following shows measured data indicating performance of optical isotropic substrates of both practical and comparative examples.

### <Experiment 1>

As the practical example, optical isotropic substrates (thickness in the range of 0.1 mm and 0.4 mm inclusive) made of siloxane crosslinking acrylic silicone resin expressed by the Constitutional Formula 1 were used.

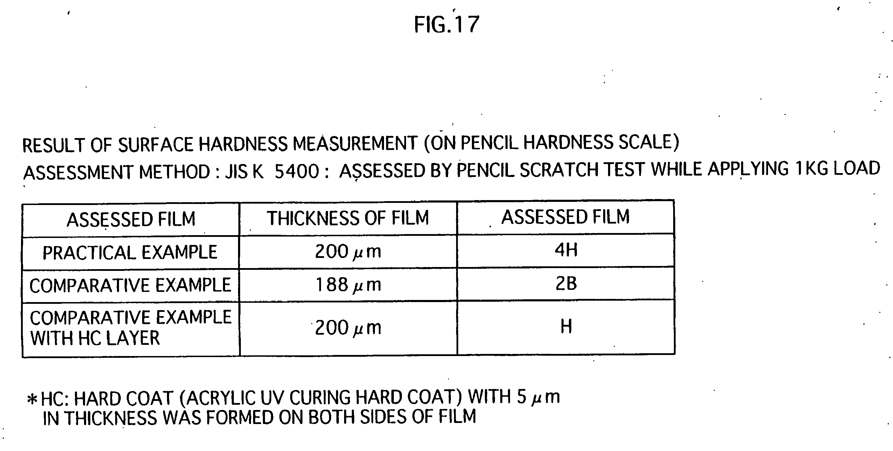

Hardness of the surface of the created optical isotropic substrate for the practical example was examined using the pencil hardness scale. The measured hardness was 4H as shown in the table shown in FIG. 17. This indicates that the optical isotropic substrate of the practical example is a film having much higher surface hardness than a conventional optical isotropic substrate (surface hardness, 2B) and even a film with a hard-coat layer formed on the conventional optical isotropic substrate (surface hardness, H).

Then, an oxidation degradation acceleration test was conducted in which the above-mentioned transparent planer members were placed in a high-temperature environment of 120 °C for a predetermined period of time, and the following practical examples a-f were prepared.
Practical Example (a): No high-temperature treatment
Practical Example (b): 150 hour high-temperature treatment
Practical Example (c) : 240 hour high-temperature treatment
Practical Example (d): 480 hour high-temperature treatment
Practical Example (e): 720 hour high-temperature treatment
Practical Example (f): 1000 hour high-temperature treatment

On the other hand, "ARTON" produced by JSR corporation was used as a cyclic polyolefin resin transparent planer member for the comparative examples. A hard-coat process was performed on both surfaces of the planer member using a light curing acrylic material to make a three-layered planer member. Then, an oxidation degradation acceleration test was conducted in which each three-layered planer member was placed in a high-temperature environment of 120 °C for a predetermined period of time, and in this way the following comparative examples g-l were prepared.

Comparative Example (g): HC/ARTON/HC-three layered structure (No high-temperature treatment)
Comparative Example (h): HC/ARTON/HC-three layered structure (150 hour high-temperature treatment)
Comparative Example (i): HC/ARTON/HC-three layered structure (240 hour high-temperature treatment)
Comparative Example (j): HC/ARTON/HC-three layered structure (480 hour high-temperature treatment)
Comparative Example (k) HC/ARTON/HC-three layered structure (720 hour high-temperature treatment)
Comparative Example (1) : HC/ARTON/HC-three layered structure (1000 hour high-temperature treatment)

Transmittance measurement (%) was performed on each of the practical and comparative examples after the above high-temperature treatment.

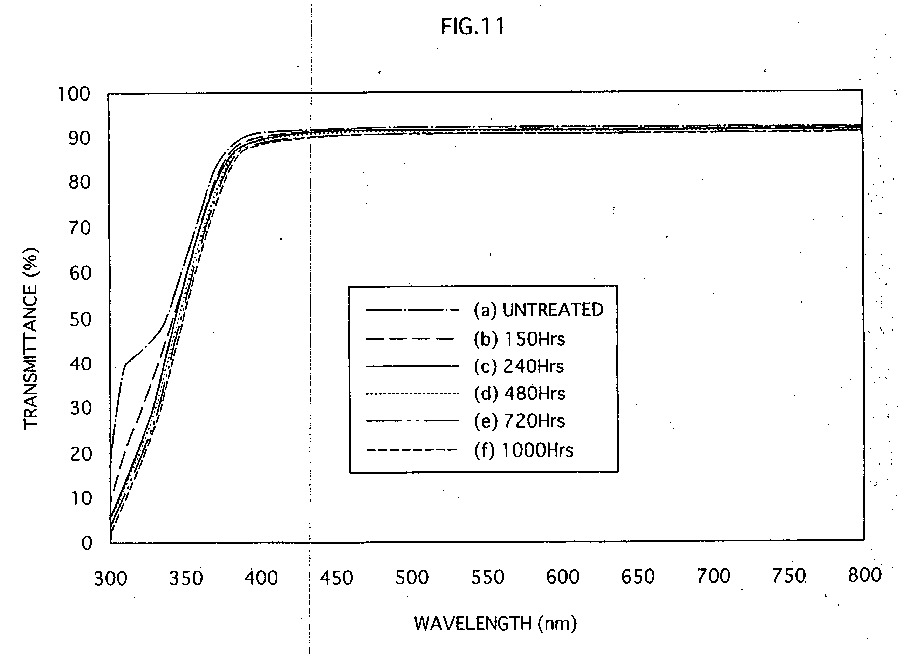

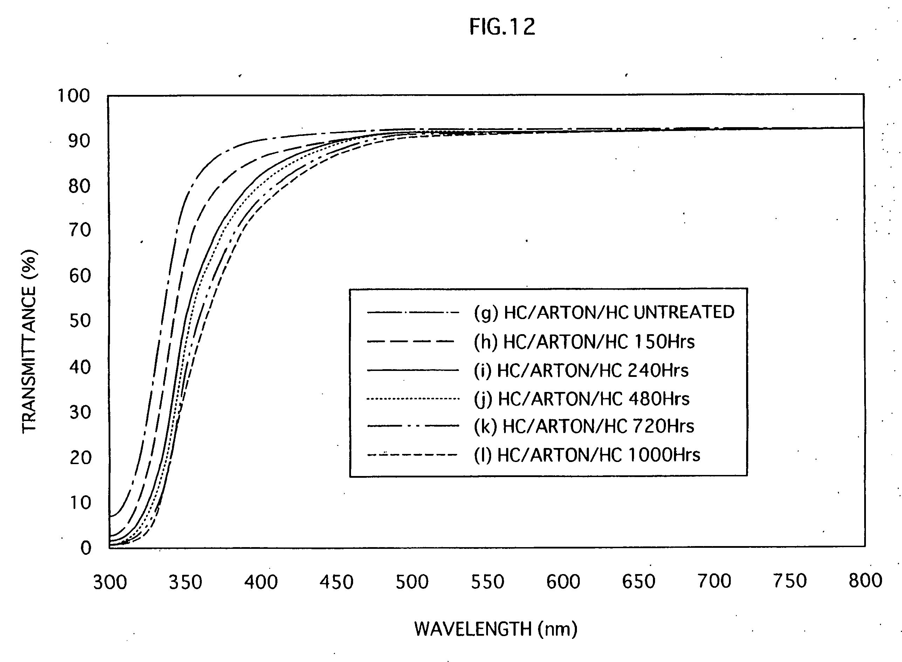

Results of the transmittance measurement are shown in FIGs. 11 and 12.

Transmittance of both practical and comparative examples tends to decrease against light having shorter wavelengths, as shown in these figures. In particular, as to Comparative Examples g-1, the transmittance against the shorter wavelength light significantly reduces as the period of the high-temperature treatment becomes longer.

For example, with Comparative Example h (150 hour high-temperature treatment), the transmittance against light having a wavelength of 400 nm is 86%, which is about 96% of the transmittance of the three-layered planer member with no high-temperature treatment.

In addition, yellow discoloration can be seen on the film with unaided eyes, as compared to the high-temperature non-treated planer member.

Furthermore, with Comparative Example i (1000 hour high-temperature treatment), the transmittance against light having a wavelength of 400 nm is 78%, which is about 87% of the high-temperature non-treated planer member. Significant yellow discoloration is seen on the film with unaided eyes as compared to the high-temperature non-treated planer member.

On the other hand, regarding the practical examples, Practical Example f which was treated in the high-temperature environment for the longest period of time exhibits 89.4% transmittance against light of 400 nm wavelength, which is 98.7% of the high-temperature non-treated planer member.

In addition, discoloration cannot be observed with unaided eyes when compared to the high-temperature non-treated planer member, and thus it can be understood that favorable performance (optical permeability and isotropy) for image display of a touch panel can be obtained even in a high-temperature environment.

According to the visual assessment, it is desirable that transmittance of a film causing no yellow discoloration after the high-temperature treatment exceed 95.6%, being around 96% or more.

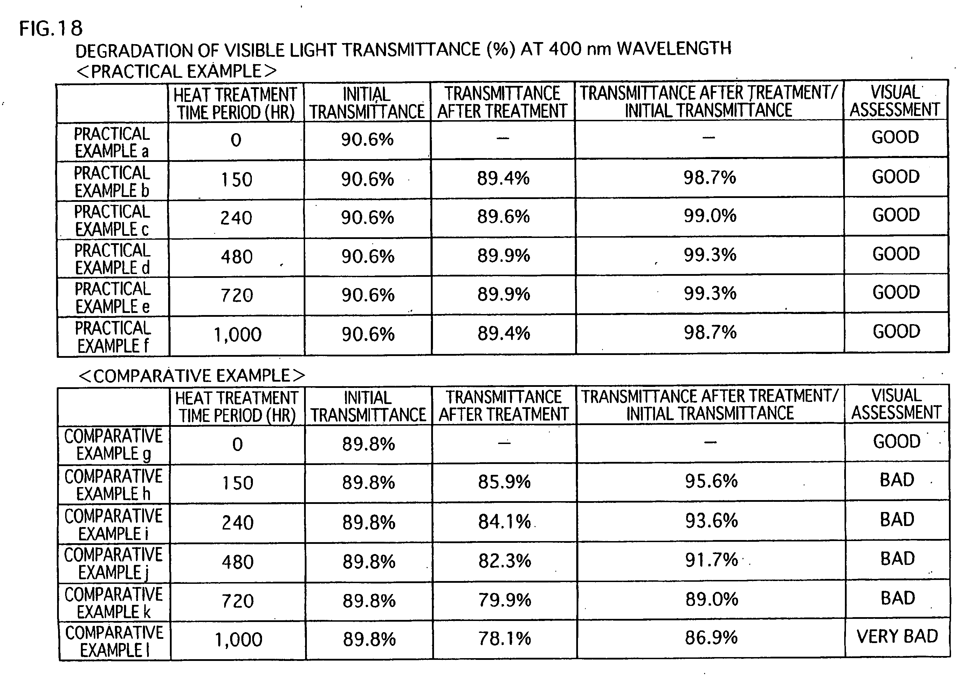

FIG. 18 is a table with data showing visible light transmittance of the practical examples.

This data also shows the practical example having favorable performance. Thus, the high optical performance of the practical examples is attributed to the highly stable molecular structure, and it is therefore also assumed that the transparent planer members of the present invention have good heat resistance due to the siloxane crosslinking acrylic silicone resin.

### 3.4 Other Particulars

The touch panel having the above structure can be also applied to an LCD in which polarizing plates are provided on both sides.

As a film material of the planer members, so-called phase difference films can be used instead of optical isotropic films, or alternatively a phase difference film may be additionally laid thereon. As an example of such a phase difference film, a 1/4λ phase difference film can be used. With the use of this film, it is possible to obtain favorable, low reflection by causing the reflected light circularly polarized and reducing the internal reflection of the touch panel. Note, however, that an LCD having polarizing plates provided on both surfaces should be used in this case.

Additionally, separately providing a low-reflecting layer, such as an LR (low reflection) layer or an AR (anti reflection) layer, on the surface of the 1^{st} planer member,for example, realizes low reflection from the upper most surface, which further improves the visibility. It is preferable that the present invention also have such a structure.

### EMBODIMENT 3

### 4-1. Method of Manufacturing Film

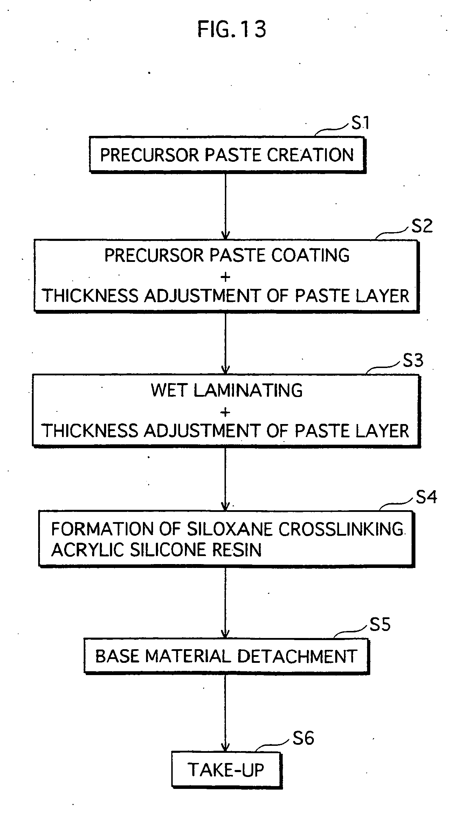

The following explains, as Embodiment 3, a method of manufacturing a siloxane crosslinking acrylic silicone resin film of the present invention used in a touch panel. FIG. 13 shows manufacturing steps of the film.

The flow of the manufacturing steps shown in the figure is one example, and is composed of: precursor paste creation; precursor paste coating; wet laminating; formation of siloxane crosslinking acrylic silicone resin; base material detachment; and take-up (here, a total of six steps from S1 to S6).

Note that the order of these processes is merely one example, and the present invention is not limited to this process sequence. In addition, the sequence can be accordingly adjusted in a manner that some of the processes are carried out simultaneously, the number of processes is increased, or the processes are conducted individually.

A manufacturing apparatus 100 to be hereinafter described, for example, concurrently conducts processes of the precursor paste coating and the thickness adjustment of a paste layer in S2, and processes of the wet laminating and the thickness adjustment of a paste layer in S3. In addition, a manufacturing apparatus 150 carries out the precursor paste coating, wet laminating, and thickness adjustment of a paste layer substantially concurrently.

The following sequentially describes the above-mentioned processes together with the structure and drive system of the manufacturing apparatus.

### 4-2. Manufacturing Apparatus

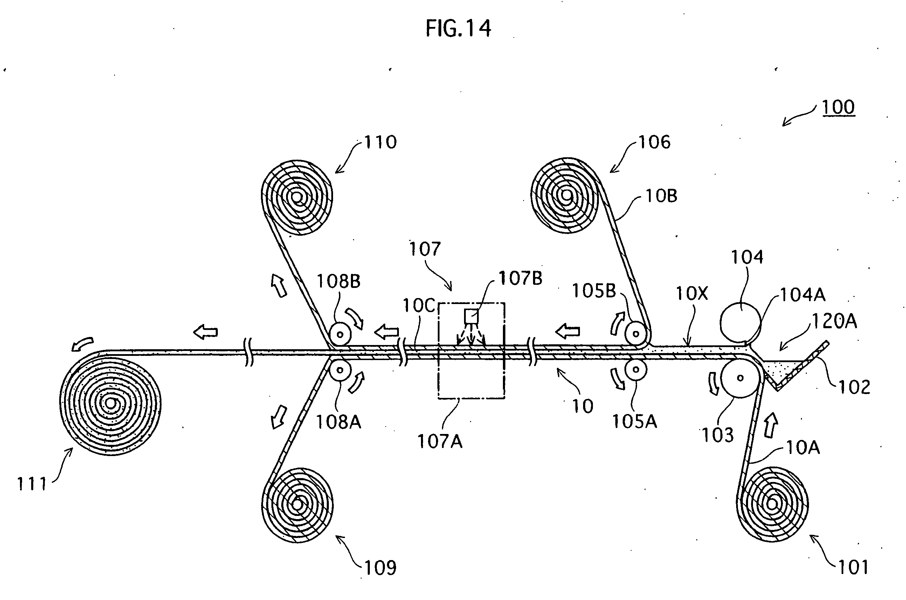

FIG. 14 is a schematic diagram showing the structure of the film manufacturing apparatus 100 used for actually conducting the above manufacturing steps.

As shown in the figure, the manufacturing apparatus 100 includes: a tray 102 in which precursor paste is set; a backup roller 103; a roll knife 104; rollers 105A and 105B; detachment rollers 108A and 108B; and a UV irradiation device 107. As to each pair of the backup roller 103 and roller knife 104, the rollers 105A and 105B, and the detachment rollers 108A and 108B, the paired rollers are positioned so as to align their axes in parallel to each other (along the direction perpendicular to the plane of the drawing sheet of FIG. 14) and oppose each other with a predetermined space therebetween.

In addition, a PET base material 10A wound on a base material roller 101 is inserted between the backup roller 103 and roll knife 104, between the rollers 105A and 105B, and between the detachment rollers 108A and 108B. Furthermore, a wet-lamination base material 10B wound on a base material roller 106 is inserted between the rollers 105A and 105B, and between the detachment rollers 108A and 108B. Then, the precursor paste 120A is filled between these base materials 10A and 10B to form a paste layer 10X. The base materials 10A and 10B function as foundations to form the paste layer 10X in a film shape, as well as isolate the paste layer 10X from oxygen in the air.

The tray 102 is an L-shape member, and the precursor paste 120A is pooled in the inside corner of the L-shape member. The tray is inclined at an adequate angle so that the precursor paste 120A favorably comes in contact with the periphery of the backup roller 103.

The tray 102 is not indispensable, and for example, another coating may be applied to the surface of the PET base material 10A that has been transported by the roll knife 104 to the downstream side of the film manufacturing apparatus.

That is, any publicly known coating method-such as, knife coating, blade coating, dye coating, roll coating, and curtain coating-can be used, instead of the coating process by the roll knife 104.

The backup roller 103 is pivotally supported, and transports the rolled-out PET base material 10A toward the rollers 105A and 105B when the film manufacturing apparatus 100 is being driven.

The roll knife 104 has a structure in which a blade portion 104A is provided on the circumference of a cylindrical body in a manner that the blade portion 104A has a sharp cross-sectional shape and opposes the backup roller 103.

The rollers 105A and 105B have the same structure, and are positioned closely to each other with a specific space therebetween, which is smaller than the space between the backup roller 103 and roll knife 104. By these backup roller 103 and roll knife 104 with a narrower gap therebetween, the thickness of the precursor paste layer can be adjusted. In the case where the roll knife 104 can sufficiently adjust the thickness of the paste layer, the rollers 105A and 105B do not have to perform the adjustment.

The gaps between the backup roller 103 and the roll knife 104 and between the rollers 105A and 105B are individually adjusted in the range of several micrometers and several hundreds micrometers in accordance with the thickness of a film to be formed.

The UV irradiation device is used for forming a siloxane crosslinking acrylic silicone resin by UV-irradiating the precursor paste 120A (the paste layer 10X) to thereby cause a chemical reaction (siloxane crosslinking reaction). For a UV lamp 107B set inside a UV shielding case 107A, a commercially available UV lamp (e.g. air-cooled mercury lamp produced by Eyegraphics Co., Ltd.) can be used. Lamp selection for the UV lamp 107B should be made based on the type of a siloxane crosslinking acrylic silicone resin to be formed.

The following shows an example of setting combinations for the film manufacturing apparatus 100.
Viscosity of Precursor Paste: 650 mPa·s
Film Formation Speed (Coating Speed): 2 m/min
<UV Irradiation Intensity>
Illumination Intensity: 540 mW/cm²
Cumulative Irradiance: 1200 mJ/cm²

As to UV irradiation intensity, in the case when the illumination intensity is relatively low even if the cumulative irradiance is high, problems arise in which a sputtered film, such as a resistance film formed on the surface of the siloxane crosslinking acrylic silicone resin (see Embodiment 1), tends to become detached. According to data of an investigative experiment conducted by the inventors of the present application, for example, the detachment of the sputtered film occurs when the film with a thickness of 200 µm is UV-irradiated in the setting combination where the illumination intensity is 72.4 mW/cm², the film formation speed is 0.5 m/min, and the cumulative irradiance is 1043 mJ/cm². Note that the occurrence of the sputtered film detachment probably depends on the thickness and material of a film to be manufactured, and it is therefore desirable to preadjust accordingly the setting condition on the UV irradiation device in view of properties of the film to be made.

### 4.3 Procedure of Film Manufacturing Method

On the occasion of manufacturing a film using the manufacturing apparatus 100 with the above structure, the operator prepares in advance the precursor paste 120A of a siloxane crosslinking acrylic silicone resin (S1).

As materials for the precursor paste 120A, an acrylic resin, a silicon material (silicon atoms, or various molecules-e.g. silane including silicon), a viscosity modifier, and a polymerization initiator (e.g. photoradical polymerization initiator and photo-cation polymerization initiator) are used. These materials are mixed so that the ratio of the percentage by weight (wt%) of acrylic resin molecules to the percentage by weight of silicon atoms in molecules of the finally formed siloxane crosslinking acrylic silicone resin becomes 88.5:11.5, for example. Note that, according to investigation of the present inventors, it has been found that ideal viscosity of the precursor paste ranges from 300 mPa·s to 50000 mPa·s inclusive.

Next, before the manufacturing apparatus 100 is driven, the operator operates in advance the base material roller 101 to insert the PET base material 10A between the backup roller 103 and the roll knife 104, between the rollers 105A and 105B, and between detachment rollers 108A and 108B. Additionally, the tip of the PET base material 10A is wound around the take-up roller 109.

Subsequently, the operator puts a sufficient amount of the precursor paste 120A in the tray 102. When the operator drives the apparatus 100 in this state of things, the precursor paste 120A is applied to the PET base material 10A wound around the circumference of the backup roller 103. Herewith, the paste layer 10X is formed. When the paste layer 10X reaches the gap between the backup roller 103 and the roll knife 104, a bank (accumulation of the paste) is formed in the vicinity of the gap, and then the paste layer 10X is adjusted by the blade portion 104A to have a predetermined thickness (S2).

Then, the wet-lamination base material 10B is laminated on the paste layer 10X by the rollers 105A and 105B positioned on the downstream side in the transporting direction, and the rollers 105A and 105B press the wet-lamination base material 10B to form it on the paste layer 10X. The rollers 105A and 105B also carry out adjustment of the thickness of the paste layer 10X (S3).

Note that, in the case where the thickness of the paste layer 10X is adjusted only using the gap between the backup roller 103 and the roll knife 104, the gap between the rollers 105A and 105B can be made wider. Even in this case, there is no problem performing the wet lamination process, S3.

In this way, by adjusting the thickness of the paste layer in two stages, the manufacturing apparatus 100 forms a three-layer laminated film 10 composed of the PET base material 10A, the paste layer 10X and the wet-lamination base material 10B.

When transported to the UV irradiation device 107, the laminated film 10 is UV-irradiated inside the device 107. Herewith, in the paste layer, a chemical reaction (ultraviolet light crosslinking reaction) is caused in a manner that the paste layer is isolated by the PET base material 10A and wet-lamination base material 10B from oxygen in the air, and whereby the acrylic molecules and silicon atoms are cross-linked by siloxane bonds. By this reaction, a siloxane crosslinking acrylic silicone resin film is formed (S4).

Subsequently, the laminated film 10 is separated by the paired detachment rollers 108A and 108B. That is, the PET base material 10A and wet-lamination base material 10B are removed, and collected by the take-up rollers 109 and 110, respectively (S5). The remaining siloxane crosslinking acrylic silicone resin film 10C is taken up by the take-up roller 111 positioned in the most downstream section in the transport direction (S6).

The manufacturing apparatus 100 thus completes manufacturing the siloxane crosslinking acrylic silicone resin film.

Note that the taken-up siloxane crosslinking acrylic silicone resin film 10C is cut into desired size, and then predetermined electrodes (resistance film) and the like are formed on the surface of the film. The specific structure is described in Embodiment 2.

### 4-4. Different Structure of Manufacturing Apparatus

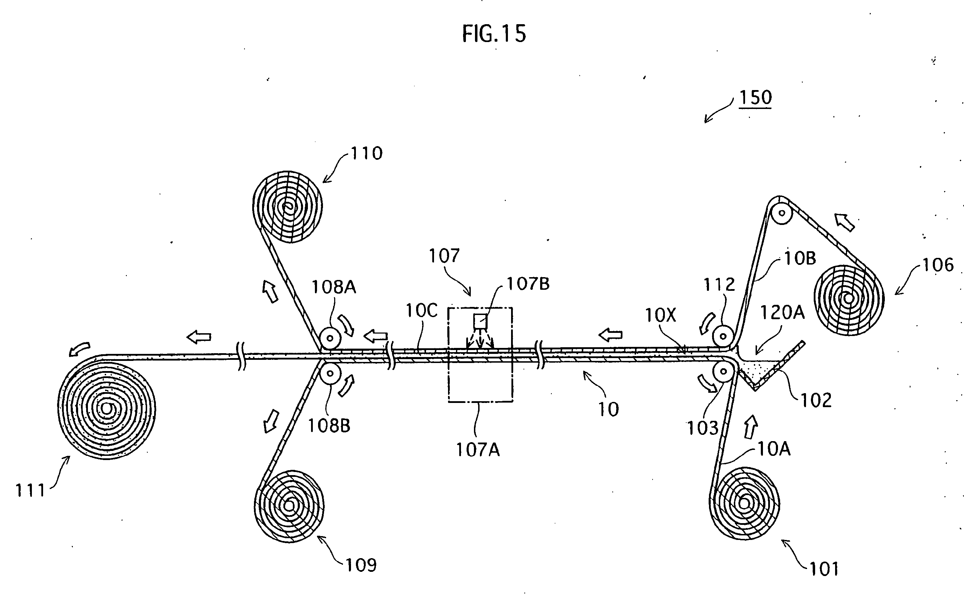

FIG. 15 schematically shows a structure of a film manufacturing apparatus 150, having a different structure from the film manufacturing apparatus 100.

As shown in the figure, the film manufacturing apparatus 150 are characterized in that the PET base material 10A and wet-lamination base material 10B are both inserted between paired backup rollers 103 and 112 on the upstream side in the film transporting direction, and the paste layer 10X is adjusted by pressure exerted by the backup rollers 103 and 112 so as to have a constant thickness while being formed between the PET base material 10A and the wet-lamination base material 10B passing between the backup rollers 103 and 112. That is, the manufacturing apparatus 150 concurrently performs processes of precursor paste coating, wet laminating, and thickness adjustment of the paste layer.

The film manufacturing apparatus 150 having the above structure realizes the same advantageous effects as the film manufacturing apparatus 100. Besides, the film manufacturing apparatus 150 is capable of blocking off the precursor paste from the external air at an early stage, and therefore allows for taking a large space for the UV irradiation (S4) in the transport path, whereby offering the further advantageous effect that the irradiation time period can be largely adjusted in accordance with the configuration and type of film.

Note that the roll knife 104 can be used in place of the backup roller 112 as in Embodiment 3, which is however not very favorable for practical purposes since powder is generated due to the wet-lamination base material 10B being scraped against the roll knife 104.

### 4-5. PET Base Material

The present invention forms the siloxane crosslinking acrylic silicone resin film 10C by causing the precursor paste layer 10X to adhere tightly to the surfaces of the thin-film PET base material 10A and wet-lamination base material 10B (both are hereinafter referred to as the "PET base materials"). Accordingly, the PET base materials need to have appropriate affinity (adhesion) for the siloxane crosslinking acrylic silicone resin film as well as a property (detachability) for realizing efficient operations in the detachment process.

The manufacturing method of the present invention can use commercially available PET base materials manufactured by various companies, yet one having good affinity and detachability is desirable. However, there is no defined identification available at the moment to obtain these properties. Accordingly, it is necessary to select a commercially available PET base material in accordance with the surface properties of a siloxane process linking acrylic silicone resin film to be actually formed. In addition, the detachability can be changed by adjusting the surface roughness of the base material, and therefore ideal detachability can be found by changing the surface roughness of a single material.

A predetermined surface property can be added to the siloxane crosslinking acrylic silicone resin film by performing surface treatment on either one of the PET base material 10A and the wet-lamination base material 10B. Here, the surface treatment is performed on at least one side to be positioned opposite the paste layer 10X (hereinafter referred to as the "opposed side").

Surface treatment is performed on the opposed side of, for example, the PET base material 10A so as to have predetermined roughness (e.g. the arithmetic average roughness (Ra): 0.2 µm; and the maximum roughness depth (Rz): 2.2 µm), and whereby the surface of the siloxane crosslinking acrylic silicone resin film can be transferred to an uneven surface with concave and convex pits, producing an anti-Newton ring effect. Herewith, a property of diffusing reflected light is added to the film surface, which prevents a Newton ring from occurring in paired planer members made of the film when the touch panel is in use (for more specific information, refer to an account to be described later in this document). Thus, it is expected to achieve high visibility and excellent performance of the image display.

Alternatively, surface treatment is performed to give a different predetermined roughness to the surface, and whereby blocking prevention can be applied so that the film can be favorably taken up during the film manufacturing. That is, in the case that a film material has a smooth surface, there is a problem of causing creases as a result that the film material is not properly taken up by a roll. Here, microscopic concave and convex pits can be provided on the film surface by the process of blocking prevention. In this way, an appropriate amount of slip is given to the surface, and the problem of creases can thus be resolved while the handling ability is improved.

Specifically speaking, the blocking property can be measured using the following methods (blocking measurements and slip measurements).

### <Blocking Measuring Method>

10 cm by 10 cm films are placed one atop the other with the front- and back-side surfaces facing each other, to which a load of 100 g/cm² is applied. In this state of things, the films are stored for 24 hours in a dry environment of 40 °C.

Then, the peel strength is measured in an environment with a temperature of 23 °C based on a measuring method described in JIS P8139, using a T-type peel test machine, HEIDON-17, manufactured by Shinto Scientific Co., Ltd.

### <Slip Measuring Method>

The static and dynamic friction coefficients are measured in an environment with a temperature of 23 °C based on a measuring method described in ASTM D1894, using a surface-property measuring machine, HEIDON-14DR, manufactured by Shinto Scientific Co., Ltd.

Note that, according to a different experiment conducted by the inventors of the present application, it has been found that blocking does not take place if the value is 0.5 N/25 mm or less in the blocking measuring method.

According to results of blocking measurements conducted using commercially available materials, the front- and back-side surfaces of a film formed by using "O" grade of Teijin DuPont Films Ltd. for the 1^{st} and 2^{nd} film base materials have static and dynamic friction coefficients of 2.5 and 2.0, respectively, as shown in Table 2 below.

On the other hand, the front- and back-side surfaces of a film formed by using "U2" grade of Teijin DuPont Films Ltd. for the 1^{st} film base material while using "O" grade of Teijin DuPont Films Ltd. for the 2^{nd} film base material have static and dynamic friction coefficients of 0.5 and 0.4, respectively.

Instead of performing the surface treatment on the thin-film PET base material 10A and wet-lamination base material 10B, it can be expected to produce similar effects by choosing a commercially-produced material on which such surface treatment has already been performed.

Note that the effects of Newton-ring prevention and blocking prevention can be established by adjusting the settings for the above-mentioned surface treatment.

### <Assessment of Surface Properties>

The following is related to an investigation conducted by the inventors of the present application on surface properties of a siloxane crosslinking acrylic silicone resin film which was detached from a representative commercially-available PET base material.

The measurement apparatus and assessment method used for the investigation are shown below.

Measurement Apparatus: a surface roughness/profile measuring instrument "SURFCOM 575A-3D" manufactured by Tokyo Seimitsu Co., Ltd.

Regarding setting parameters on the apparatus, the cutoff value of the profile filter is 0.8 mm, the assessment length is 2.5 mm, and the measuring speed is 0.3 mm/sec.

### <Assessment Method>

Using a stylus-type surface roughness measuring method, data detection was conducted by contacting a probe (stylus) having a 5-µmR tip with the surface of the base material.

Specifically speaking, JIS B0601-2001 was adopted as a procedure for the roughness assessment.

Companies A to E in the table correspond to Unitika Ltd, Toyobo Co., Ltd., Teijin DuPont Films Ltd., Toray Inc., and Mitsubishi Polyester Film Corporation.

### <Assessment of Turbidity>

The following shows turbidity (haze value) of the above-mentioned siloxane crosslinking acrylic silicone resin film which was detached from the PET base material.

The measurement apparatus and assessment method used for the investigation are as follows.
Measurement Apparatus: Turbidimeter "NDH-2000" manufactured by Nippon Denshoku Industries Co., Ltd.
Assessment Method: JIS K7105

### <Performance Investigation of Film Base Material>

Next, using each commercially-available PET base material, the siloxane crosslinking acrylic silicone resin film of the practical 3 example was created based on the manufacturing method of Embodiment 3. In the film creation, the adhesion and detachability of each PET base material were investigated in the process of PET-base-material detachment. As to the PET base material, the front- and back-side surfaces were examined, and each side was identified as one sample type.

The assessment of this investigation is shown below with four categories. For the manufacturing method of the present invention, it is considered desirable to use a material chosen from "Excellent Adhesion" below.

In addition, when the values of Ra and Rz are high, the haze value tends to become high. A PET base material can be selected so as to obtain a desirable haze value, as well as to provide Newton-ring prevention and slip enhancement.

### <Excellent Adhesion>

Five sample types were identified to belong to this category: "K1211" (front) manufactured by Toyobo Co., Ltd.; "O" (front and back) and "U2" (front) by Teijin DuPont Films Ltd.; and "E60L" (front) by Toray Industries, Inc.

These materials are considered as the best suited PET base materials.

### <Reasonable Adhesion>

14 sample types were identified to belong to this category: "X30" (front), "X44" (front), "X43" (front), and "X42" (front) manufactured by Toray Industries, Inc.; and "T600" (front and back), "T100" (front and back), "G900" (back), "W100" (front and back), and "W400" (front and back) by Mitsubishi Polyester Film Corporation; and "CM" (front) by Unitika Ltd.

With these materials, although the process of detaching the base material is readily performed, particular care must be paid at the point of use since they can relatively easily come off from the siloxane crosslinking acrylic silicone resin film.

### <Insufficient Adhesion>

14 sample types were identified to belong to this category: "U4" (front) manufactured by Teijin DuPont Films Ltd; "X10S" (front), "S10" (front), "H10" (front and back), "E20" (front), and "X20" (front) by Toray Industries, Inc.; "U100" (front and back), "UX01" (front), "W200" (front and back), "B100" (back), and "E150" (front) by Mitsubishi Polyester Film Corporation.

Since these materials are very likely to come off from the siloxane crosslinking acrylic silicone resin film, there is concern that problems could occur during the manufacture of the film. Accordingly, they are considered unsuitable for the manufacturing method of the present invention.

### <Overly Strong Adhesion>

Six sample types were identified to belong to this category: "K1211" (back; corona treatment) manufactured by Toyobo Co., Ltd.; "U298W" (front; simple adhesion treatment), "FW2" (front), and "329" (front) by Teijin DuPont Films Ltd.; and "E60" (front and back) by Toray Industries, Inc.

Although having excellent adhesion to the siloxane crosslinking silicone resin film, these materials have so poor detachability that the detachment is almost impossible, and the siloxane crosslinking acrylic silicone resin film cannot be singly taken out. Accordingly, these materials are considered unsuitable for the manufacturing method of the present invention.

It is considered that a future issue is to facilitate readily identifying a suitable film for the present invention by finding common properties in these PET base materials.

Note that the touch panel of the present invention is not limited to those structural examples shown in the embodiments above, and can also be applied to other structures.

For example, the touch panel of the present invention can be applied to an LCD, on both surfaces of which polarizing plates are provided.
As a film material of the planer members, so-called phase difference films can be used instead of optical isotropic films. As an example of such a phase difference film, a 1/4λ phase difference film can be used. With the use of this film, it is possible to obtain favorable, low reflection by causing the reflected light circularly polarized and reducing the internal reflection of the touch panel. In this case, however, an LCD having polarizing plates provided on both surfaces should be used.

Additionally, in the above-mentioned F-G type touch panel, a layered structure (referred to as F-F-G type, or F-F-P type) in which the film material of the planer members are accordingly attached by an adhesive member to a glass plate or a resin plate can be provided, instead of the glass substrate 15G. The number of layered films and glass substrates, the stacking sequence and the like can be adjusted accordingly.

Additionally, separately providing a low-reflecting layer-such as an LR (low reflection) layer or an AR (anti reflection) layer-on the surface of the 1^{st} planer member, for example, realizes low reflection from the upper most surface, which in turn realizes further improvement of visibility. It is preferable that the touch panel of the present invention also have such a structure

### 4-6. Other Particulars

In Embodiment 3, the manufacturing apparatuses 100 and 150 perform the processes of base-material detachment (S5) and take-up (S6) continuously after the process of creating siloxane crosslinking acrylic silicone resin (S4). However, the present invention is not limited to this case, and the three-layered film may be directly wound up and/or cutting and other processing treatments may be performed after S4. In particular, the surface of the film 10C can be favorably protected by leaving at least either one of the base materials 10A and 10B on the siloxane crosslinking acrylic silicone resin film.

### Industrial Applicability

The touch-panel film and touch panel of the present invention are applicable to, for example, displays (e.g. built-in liquid-crystal-display touch panels) of car navigation systems designed to be used in high-temperature environments.

## Claims

1. An inner touch panel in which a 1^{st} and a 2^{nd} planar member, each having an electrode disposed on one surface thereof, oppose each other with a fixed space therebetween, and a polarising plate is stacked on an other surface of the 1^{st} planar member, the electrodes facing each other across the space, wherein
at least one of the 1^{st} and the 2^{nd} planar members is a film made of a siloxane crosslinking acrylic silicone resin of thickness 0.1mm to 0.4mm.

2. The touch panel of claim 1, being a resistive type, wherein at least one of the electrodes is made with a resistance film.

3. A capacitive touch panel in which a 1^{st} and a 2^{nd} planar member, each having a conducting film in a predetermined pattern disposed on one surface thereof, are stacked one atop another with an insulating layer sandwiched therebetween, the insulating layer being made with a film and/or an adhesion layer, wherein
at least one of the 1^{st} and the 2^{nd} planar members is a film made of a siloxane crosslinking acrylic silicone resin of thickness 0.1mm to 0.4mm.

4. The capacitive panel of claim 3, wherein
the conducting films face each other with the insulating layer sandwiched therebetween.

5. The capacitive touch panel of claim 3, wherein
the conducting films face away from each other and are both disposed on one of an input plane side and a side opposite the input plane side with the insulating layer sandwiched therebetween.

6. The capacitive touch panel of claim 3, wherein
the conducting films each are a layered film in which a plurality of thin films are stacked one atop another.

7. The capacitive touch panel of claim 6 wherein
the plurality of thin films include layers each made of a transparent conductive material selected from the group consisting of antimony-added lead oxide, fluorine-added tin oxide, aluminium-added zinc oxide, potassium-added zinc oxide, silicon-added zinc oxide, zinc oxide-tin oxide, and indium oxide-tin oxide, or made of a transparent conductive material selected from various other metal materials.

8. A capacitive touch panel including a planar member, both main surfaces of which respectively have a conducting film in a predetermined pattern, wherein
the planar member is a film made of a siloxane crosslinking acrylic silicone resin of thickness 0.1 mm to 0.4mm.

9. The capacitive touch panel of claim 8, wherein
the plurality of thin films include layers each made of a transparent conductive material selected from the group consisting of antimony-added lead oxide, fluorine-added tin oxide, aluminium-added zinc oxide, potassium-added zinc oxide, silicon-added zinc-oxide, zinc oxide-tin oxide, and indium oxide-tin oxide, or made of a transparent conductive material selected from various other metal materials.

10. A method of manufacturing a siloxane crosslinking acrylic silicone resin film for the touch panel of any one of claims 1 to 9, the method comprising the steps of:
a paste application step of forming a paste layer by applying a precursor paste made of a siloxane crosslinking acrylic silicone resin on a surface of a 1^{st} film base material continuously reeled out;
a wet laminating step of laminating a 2^{nd} film base material on the paste layer; and
a resin forming step of forming a siloxane crosslinking acrylic silicone resin film by curing the paste layer by exposing the paste layer after the wet laminating step to ultraviolet light.

11. The method of claim 10, further comprising:
a layer thickness adjusting step of adjusting thickness of the paste layer, performed (i) prior to the resin forming step, or (ii) together with one of the paste application step and the wet laminating step.

12. The method of claim 10, further comprising:
a detachment step of removing at least one of the 1^{st} and 2^{nd} film base materials from the siloxane crosslinking acrylic silicone resin film, the detachment step being performed after the resin forming step.

13. The method of claim 10, wherein a polyethylene terephtahalate resin film is used for at least one of the 1^{st} and 2^{nd} film base materials.

14. The method of claim 10, wherein
a surface treatment for adding a surface property of the siloxane crosslinking acrylic silicone resin film is applied to at least one of the 1^{st} and the 2^{nd} film base materials.

15. The method of claim 14, wherein
the surface treatment is an anti-Newton ring treatment.

16. The method of claim 14, wherein
the surface treatment is a blocking prevention treatment.

17. A siloxane crosslinking acrylic silicone resin film manufactured by the method claimed in any one of claims 10 to 16.

## Patentansprüche

1. Berührungsempfindliches Bedienfeld des Innentyps, in dem ein 1. und ein 2. ebenes Element, die jeweils eine Elektrode aufweisen, die auf einer Oberfläche davon angeordnet ist, einander mit einem unveränderlichen Abstand dazwischen gegenüberliegen und eine Polarisationsplatte auf einer anderen Oberfläche des 1. ebenen Elements gestapelt ist, wobei die Elektroden über den Abstand hinweg einander zugewandt sind, wobei
mindestens eines des 1. und des 2. ebenen Elements ein Film ist, der aus einem siloxanvernetzenden Acryl-Silikonharz mit einer Dicke von 0,1 mm bis 0,4 mm hergestellt ist.

2. Berührungsempfindliches Bedienfeld nach Anspruch 1, bei dem es sich um einen resistiven Typ handelt, wobei mindestens eine der Elektroden mit einem Widerstandsfilm hergestellt ist.

3. Kapazitives berührungsempfindliches Bedienfeld, in dem ein 1. und ein 2. ebenes Element, die jeweils einen leitenden Film in einem vorher festgelegten Muster aufweisen, der auf einer Oberfläche davon angeordnet ist, aufeinander gestapelt sind, wobei eine Isolierschicht dazwischen eingeschoben ist, wobei die Isolierschicht mit einem Film und/oder einer Klebeschicht hergestellt ist, wobei
mindestens eines des 1. und des 2. ebenen Elements ein Film ist, der aus einem siloxanvernetzenden Acryl-Silikonharz mit einer Dicke von 0,1 mm bis 0,4 mm hergestellt ist.

4. Kapazitives Bedienfeld nach Anspruch 3, wobei
die leitenden Filme einander zugewandt sind, wobei die Isolierschicht dazwischen eingeschoben ist.

5. Kapazitives berührungsempfindliches Bedienfeld nach Anspruch 3, wobei
die leitenden Filme voneinander abgewandt sind und beide auf einer von einer Eingabeebenenseite und einer Seite, die der Eingabeebenenseite gegenüberliegt, wobei die Isolierschicht dazwischen eingeschoben ist, angeordnet sind.

6. Kapazitives berührungsempfindliches Bedienfeld nach Anspruch 3, wobei
die leitenden Filme jeweils ein Schichtfilm sind, in dem mehrere Dünnfilme aufeinander gestapelt sind.

7. Kapazitives berührungsempfindliches Bedienfeld nach Anspruch 6, wobei
die mehreren Dünnfilme Schichten umfassen, die jeweils aus einem transparenten leitfähigen Material hergestellt sind, das aus der Gruppe bestehend aus mit Antimon versetztem Bleioxid, mit Fluor versetztem Zinnoxid, mit Aluminium versetzten Zinkoxid, mit Kalium versetztem Zinkoxid, mit Silizium versetztem Zinkoxid, Zinkoxid/Zinnoxid und Indiumoxid/Zinnoxid ausgewählt ist, oder aus einem transparenten leitfähigen Material hergestellt sind, das aus verschiedenen anderen Metallmaterialien ausgewählt ist.

8. Kapazitives berührungsempfindliches Bedienfeld, das ein ebenes Element umfasst, dessen beide Hauptoberflächen jeweils einen leitenden Film in einem vorher festgelegten Muster aufweisen, wobei
das ebene Element ein Film ist, der aus einem siloxanvernetzenden Acryl-Silikonharz mit einer Dicke von 0,1 mm bis 0,4 mm hergestellt ist.

9. Kapazitives berührungsempfindliches Bedienfeld nach Anspruch 8, wobei
die mehreren Dünnfilme Schichten umfassen, die jeweils aus einem transparenten leitfähigen Material hergestellt sind, das aus der Gruppe bestehend aus mit Antimon versetztem Bleioxid, mit Fluor versetztem Zinnoxid, mit Aluminium versetzten Zinkoxid, mit Kalium versetztem Zinkoxid, mit Silizium versetztem Zinkoxid, Zinkoxid/Zinnoxid und Indiumoxid/Zinnoxid ausgewählt ist, oder aus einem transparenten leitfähigen Material hergestellt sind, das aus verschiedenen anderen Metallmaterialien ausgewählt ist.

10. Verfahren zur Herstellung eines Films aus siloxanvernetzendem Acryl-Silikonharz für das berührungsempfindliche Bedienfeld nach einem der Ansprüche 1 bis 9, wobei das Verfahren die folgenden Schritte umfasst:
einen Pastenauftragungsschritt zum Bilden einer Pastenschicht durch Auftragen einer Vorläuferpaste, die aus einem siloxanvernetzenden Acryl-Silikonharz hergestellt ist, auf eine Oberfläche eines 1. Filmbasismaterials, das kontinuierlich abgerollt wird;
einen Nasslaminierungsschritt zum Laminieren eines 2. Filmbasismaterials auf die Pastenschicht und
einen Harzbildungsschritt zum Bilden eines Films aus siloxanvernetzendem Acryl-Silikonharz durch Härten der Pastenschicht, indem die Pastenschicht nach dem Nasslaminierungsschritt ultraviolettem Licht ausgesetzt wird.

11. Verfahren nach Anspruch 10, das weiterhin Folgendes umfasst:
einen Schichtdickeneinstellungsschritt zum Einstellen der Dicke der Pastenschicht, der (i) vor dem Harzbildungsschritt oder (ii) zusammen mit einem des Pastenauftragungsschritts und des Nasslaminierungsschritts durchgeführt wird.

12. Verfahren nach Anspruch 10, das weiterhin Folgendes umfasst:
einen Ablösungsschritt zum Entfernen von mindestens einem des 1. und des 2. Filmbasismaterials von dem Film aus siloxanvernetzendem Acryl-Silikonharz, wobei der Ablösungsschritt nach dem Harzbildungsschritt durchgeführt wird.

13. Verfahren nach Anspruch 10, wobei ein Film aus Polyethylenterephthalatharz für mindestens eines des 1. und des 2. Filmbasismaterials verwendet wird.

14. Verfahren nach Anspruch 10, wobei
eine Oberflächenbehandlung zum Versehen des Films aus siloxanvernetzendem Acryl-Silikonharz mit einer Oberflächeneigenschaft auf mindestens eines des 1. und des 2. Filmbasismaterials angewendet wird.

15. Verfahren nach Anspruch 14, wobei
die Oberflächenbehandlung eine Anti-Newton-Ring-Behandlung ist.

16. Verfahren nach Anspruch 14, wobei
die Oberflächenbehandlung eine Blockierverhinderungsbehandlung ist.

17. Film aus siloxanvernetzendem Acryl-Silikonharz, der mit dem Verfahren nach einem der Ansprüche 10 bis 16 hergestellt wurde.

## Revendications

1. Écran tactile de type interne, dans lequel un 1^{er} et un 2^{nd} élément plan, ayant chacun une électrode disposée sur l'une de leurs surfaces, sont placés l'un en face de l'autre avec une distance prédéterminée entre eux, et une plaque de polarisation est superposée à une autre surface du 1^{er} élément plan, les électrodes étant en regard dans l'espace, dans lequel
au moins l'un des 1^{er} et 2^{nd} éléments plans est un film constitué d'une résine de silicone acrylique réticulée par du siloxane d'une épaisseur comprise entre 0,1 mm et 0,4 mm.

2. Écran tactile selon la revendication 1, de type résistif, dans lequel au moins l'une des électrodes est élaborée avec un film résistif.

3. Écran tactile capacitif, dans lequel un 1^{er} et un 2^{nd} élément plan, ayant chacun un film conducteur disposé selon un motif prédéfini sur l'une de leurs surfaces, sont superposés l'un à l'autre, une couche isolante étant interposée entre eux, la couche isolante étant élaborée avec un film et/ou une couche adhésive, dans lequel
au moins l'un des 1^{er} et 2^{nd} éléments plans est un film constitué d'une résine de silicone acrylique réticulée par du siloxane d'une épaisseur comprise entre 0,1 mm et 0,4 mm.

4. Écran capacitif selon la revendication 3, dans lequel
les films conducteurs sont en regard l'un de l'autre, la couche isolante étant interposée entre eux.

5. Écran tactile capacitif selon la revendication 3, dans lequel
les films conducteurs sont dirigés à l'opposé l'un de l'autre et sont tous deux disposés sur l'une d'une face de plan d'entrée, une face opposée à la face du plan d'entrée comportant la couche isolante interposée entre eux.

6. Écran tactile capacitif selon la revendication 3, dans lequel
les films conducteurs ont chacun un film stratifié dans lequel une pluralité de films minces sont empilés l'un sur l'autre.

7. Écran tactile capacitif selon la revendication 6, dans lequel
la pluralité de films minces comprend des couches composées chacune d'un matériau conducteur transparent choisi parmi le groupe constitué d'oxyde de plomb additionné d'antimoine, d'oxyde d'étain additionné de fluor, d'oxyde de zinc additionné d'aluminium, d'oxyde de zinc additionné de potassium, d'oxyde de zinc additionné de silicium, d'oxyde de zinc-oxyde d'étain, et d'oxyde d'indium-oxyde d'étain, ou composées d'un matériau conducteur transparent choisi parmi divers autres matériaux métalliques.

8. Écran tactile capacitif comprenant un élément plan, dont les deux surfaces principales comportent respectivement un film conducteur selon un motif prédéfini, dans lequel
l'élément plan est un film constitué d'une résine de silicone acrylique réticulée par du siloxane d'une épaisseur comprise entre 0,1 mm et 0,4 mm.

9. Écran tactile capacitif selon la revendication 8, dans lequel
la pluralité de films minces comportent des couches composées chacune d'un matériau conducteur transparent choisi parmi par le groupe constitué d'oxyde de plomb additionné d'antimoine, d'oxyde d'étain additionné de fluor, d'oxyde de zinc additionné d'aluminium, d'oxyde de zinc additionné de potassium, d'oxyde de zinc additionné de silicium, d'oxyde de zinc-oxyde d'étain, et d'oxyde d'indium-oxyde d'étain, ou composées d'un matériau conducteur transparent choisi parmi divers autres matériaux métalliques.

10. Procédé de fabrication d'un film de résine de silicone acrylique réticulée par du siloxane pour l'écran tactile selon l'une quelconque des revendications 1 à 9, le procédé comprenant les étapes suivantes:
une étape d' application de pâte pour former une couche de pâte en appliquant un précurseur de pâte constitué d'une résine de silicone acrylique réticulée par du siloxane sur une surface d'un 1^{er} matériau de base de film déroulé en continu ;
une étape de stratification humide pour stratifier un 2^{nd} matériau de base de film sur la couche de pâte ; et
une étape de formation de résine pour former un film de résine de silicone acrylique réticulée par du siloxane en durcissant la couche de pâte par exposition de la couche de pâte à la lumière ultraviolette après l'étape de stratification humide.

11. Procédé selon la revendication 10, comprenant en outre :
une étape d'ajustement de l'épaisseur de la couche pour ajuster l'épaisseur de la couche de pâte, réalisée (i) avant l'étape de formation de résine, ou (ii) en même temps que l'une des étapes d'application de pâte et de stratification humide.

12. Procédé selon la revendication 10, comprenant en outre :
une étape de séparation pour éliminer au moins l'un des 1^{er} et 2^{nd} matériaux de base de film du film de résine de silicone acrylique réticulée par du siloxane, l'étape de séparation étant réalisée après l'étape de formation de résine.

13. Procédé selon la revendication 10, dans lequel un film de résine de poly(téréphtalate d'éthylène) est utilisé pour au moins l'un des 1^{er} et 2^{nd} matériaux de base de film.

14. Procédé selon la revendication 10, dans lequel
un traitement de surface destiné à ajouter une propriété de surface du film de résine de silicone acrylique réticulée par du siloxane est appliqué à au moins l'un des 1^{er} et 2^{nd} matériaux de base de film.

15. Procédé selon la revendication 14, dans lequel
le traitement de surface est un traitement anti-anneaux de Newton.

16. Procédé selon la revendication 14, dans lequel
le traitement de surface est un traitement préventif de blocage.

17. Film de résine de silicone acrylique réticulée par du siloxane fabriqué à l'aide du procédé selon l'une quelconque des revendications 10 à 16.
